(19) Europäisches Patentamt
European Patent Office
Office européen des brevets

(11) EP 2 809 717 B1

(12) **EUROPEAN PATENT SPECIFICATION**

(45) Date of publication and mention
of the grant of the patent:
**13.07.2016 Bulletin 2016/28**

(21) Application number: **13702439.4**

(22) Date of filing: **31.01.2013**

(51) Int Cl.:
***C08L 23/08*** *(2006.01)*

(86) International application number:
**PCT/EP2013/051867**

(87) International publication number:
**WO 2013/113797 (08.08.2013 Gazette 2013/32)**

(54) **MULTIMODAL POLYETHYLENE POLYMERS AND PROCESS PREPARING SAID POLYMER**

MULTIMODALE POLYETHYLENZUSAMMENSETZUNG UND HERSTELLUNGSVERFAHREN DAFÜR

COMPOSITIONS DE POLYÉTHYLÈNE MULTIMODA ET PROCESSUS DE PRÉPARATION CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2012 GB 201201578**

(43) Date of publication of application:
**10.12.2014 Bulletin 2014/50**

(60) Divisional application:
**15164618.9 / 2 930 205**

(73) Proprietor: **Norner AS
3960 Stathelle (NO)**

(72) Inventors:
• **HELLAND, Irene
N-3970 Langesund (NO)**
• **DRENG, Tore
N-3261 Larvik (NO)**
• **FOLLESTAD, Arild
N-3960 Stathelle (NO)**

(74) Representative: **Gordon, Kirsteen Helen
Marks & Clerk LLP
62-68 Hills Road
Cambridge
CB2 1LA (GB)**

(56) References cited:
**EP-A1- 1 041 113      WO-A1-2004/058878
WO-A1-2006/045550      US-A1- 2008 236 784
US-A1- 2009 105 422**

**Description**

INTRODUCTION

The present invention concerns a polyethylene having a multimodal molecular weight distribution comprising: (i) 20-70% wt of a lower molecular weight ethylene homopolymer; (ii) 20-70% wt of a first higher molecular weight ethylene copolymer; and (iii) 0.5-9.5% wt of a second higher molecular weight ethylene copolymer, wherein said second higher molecular weight ethylene copolymer has a greater weight average molecular weight than said first higher molecular weight ethylene copolymer. The invention is also concerned with a process for the preparation of the polyethylene, a composition comprising the polyethylene and methods of preparing articles using the polyethylene or its composition. The articles per se, particularly pipes, are a further aspect of the invention.

BACKGROUND

Polyethylene (PE) is the mostly commonly used material for the manufacture of pipes that are used for water and gas distribution, often under pressure. A major area of interest is polyethylene for HDPE pipes. These employ polyethylene polymerised at moderate pressures, using coordination catalysts.

Polyethylene used for the manufacture of HDPE pipes must meet certain requirements. They are often used at high inner pressure and subjected to external mechanical forces. Although the overall pressure is usually well below the yield stress of the polymer, mechanical failure almost always occurs before the polymer is chemically degraded. It is generally accepted that this is due to the existence of local heterogeneities of micrometer size in the polyethylene pipe causing a strong localized stress distribution around the flaws that exceeds the yield stress. Such a stress concentration induces the formation and growth of a craze by rupture of the craze fibrils. This apparently brittle failure mode, so called slow crack growth (SCG), is therefore observed and limits the lifetime of the polyethylene pipes.

Polyethylene pipes are particularly suited for non-conventional pipe installation due to their flexibility, deformability and availability in long lengths. The widespread use of modern relining techniques and fast pipe installation practices call for high material requirements and guarantees of performance, particularly with respect to the effect of scratches, notches, nicks and impingements that are inherent to these techniques and facilitates SCG. When installing pipes by modern no-dig or trenchless installation methods (e.g. pipe bursting, horizontal direction drilling) the pipe is dragged horizontally through the ground. While often highly advantageous in that the surface of the ground, e.g. roads and other installations, need not be disturbed and the installation cost significantly reduced, on the other hand, the no-dig methods give the disadvantage of a high tendency for protruding stones, rocks etc to scratch the outer surface of the pipe in the longitudinal direction. Furthermore, at the bottom of such longitudinal scratches, there will be a very high local tangential stress when pressure is applied inside the pipe. Thus, unfortunately, such scratches are very harmful since they often start cracks propagating through the wall that would otherwise never even have started. Additionally HDPE pipes are sometimes used for conducting abrasive slurries, e.g. in mining operations. For such use, it is important that the pipe has high abrasion resistance.

A polyethylene with superior resistance both to initiation of cracks as well as propagation by SCG of any cracks initiated will permit better and longer lasting pipes and polyethylene volumes used in pipe production to increase even more. Pipes with abrasion resistance are particularly attractive.

Another important potential failure mode for HDPE pipes with internal pressure in use is rapid crack propagation (RCP). If a longitudinal crack is initiated without relieving gas pressure inside a pipe with high RCP, the crack will tend to open further, splitting the pipe open very fast and over a long distance. In a pipe with low RCP properties, however, the splitting of the pipe will stop after a short distance. A polyethylene with superior resistance to RCP is therefore particularly desirable for the manufacture of pipes

There are several important properties that polyethylene should possess for pressure pipe applications;

  1) Slow crack growth (SCG) resistance
  2) Rapid crack propagation (RCP) resistance
  3) Processability to enable pipe extrusion (e.g. as indicated by $MFR_5$)
  4) Resistance to scratches/depressions (e.g. as indicated by hardness, scratch and abrasion resistance)
  5) Resistance to ductile bulging with subsequent bursting of the pipe

SCG and RCP resistance means that a crack is less likely to propagate from an existing defect whilst resistance to scratches and depressions means that defects that can induce cracks are less likely to occur.

The literature states that improvements in SCG usually cause concomitant worsening in the RCP. This is because an increased level of comonomer (usually corresponding to decreased density) is beneficial for SCG while a decreased level of comonomer is usually said to be beneficial for RCP and for ductile bulging. Moreover it is known that

if MFR$_5$ is decreased, this increases FNCT. However, this would not be acceptable since in order to extrude the polymer to pipe, the MFR$_5$ must be maintained in the range typically used for processability. The abrasion resistance to scratches must also be kept at a maximum so that defects increasing the propensity for cracks to develop are minimised. For the same reason the hardness of the polymer should be maximised. The hardness of a polyethylene generally increases with increasing crystallinity and increasing lamellar thickness. On the other hand, resistance to SCG is known to increase with decreasing crystallinity.

These counteracting factors make it very challenging to develop polyethylene for the manufacture of pipes with the necessary balance of properties, e.g. improved SCG without detrimentally affecting RCP, hardness, abrasion resistance as well as processability.

The resistance of a HDPE to SCG is usually determined by measuring its environmental stress crack resistance (ESCR). The resistance of HDPE to RCP is usually determined by measuring its impact resistance.

The polymers currently employed in HDPE pipes are mainly of two types:

1) Monomodal Cr HDPE, made in a single reactor, with a Cr (Phillips) catalyst. This technology gives a relatively poor property profile with respect to demanding pressure pipe applications.
2) Bimodal Ziegler HDPE made with two reactors operating in series; one reactor making a lower molecular weight homopolymer and one reactor making a higher molecular weight polymer containing comonomer. This technology gives a better property profile compared to monomodal Cr HDPE.

The prior art has also suggested some new polyethylenes for the production of pipes. US2009/0105422, for example, discloses a polyethylene moulding composition having a multimodal molecular mass distribution and comprising 45-55 % wt of a low molecular weight ethylene homopolymer, 20-40 % wt of a high molecular weight copolymer comprising ethylene and another olefin having from 4 to 8 carbons and 15-30 % wt of an ultrahigh molecular weight ethylene copolymer. The polymer is made in polymerisation steps with successively lower hydrogen/ethylene concentration for each step. The polyethylene is said to have an improved combination of environmental stress crack resistance, mechanical strength and processing behaviours. The examples of US'422 show that a trimodal polyethylene comprising 50 % wt low molecular weight ethylene homopolymer, 32 % wt high molecular weight ethylene/1-butene copolymer and 18 % wt ultrahigh molecular weight ethylene/1-butene copolymer has improved ESCR compared to a comparative bimodal polyethylene. The examples also show that its mechanical performance, specifically notched impact toughness and tensile creep, of the trimodal polyethylene is broadly similar to that of the bimodal comparative example. Resistance to scratching is not mentioned.

US 6,713,561 discloses a similar polyethylene moulding composition made in a similar way and teaches that it provides a better ratio of stiffness to stress cracking resistance as well as a high swelling rate of its melt. The latter is particularly advantageous in the preparation of articles such as bottles and canisters by blow moulding. The examples of US'561 show that compared to a corresponding bimodal composition, the polyethylene moulding composition has improved stress cracking resistance and swelling rate as well as a comparable flexural creep resistance.

US 7,829,646 discloses that making a HDPE pipe material in one polymerisation step with Cr/ aluminophosphate catalyst gives more favourable abrasion resistance than when using conventional Cr catalyst in one stage as well as when using Ziegler catalyst in two stages.

The prior art also includes WO 2004/058878, which discloses a polyethylene blow moulding composition particularly suitable for large blow mouldings; WO 2006/045550, which discloses a high density polyethylene composition; and EP1041113, which discloses a high density multimodal polyethylene.

None of the prior art documents, however, disclose a multimodal polyethylene for the production of pipes that provides an improved SCG compared to a bimodal polyethylene without impacting negatively on RCP and at the same time maintaining or improving hardness and/or abrasion resistance and/or scratching resistance. Such polyethylenes are particularly attractive since the properties of hardness and abrasion resistance minimise the production of detents, notches and imperfections that can subsequently initiate a crack whilst an improved SCG performance means that if a crack does develop it does so over a longer period of time thereby improving the service lifetime of a pipe.

Hence there is still a need for polyethylene for the manufacture of pipes that exhibits improved SCG without a concomitant reduction in RCP. Polyethylenes additionally showing comparable or increased abrasion resistance and/or hardness and/or scratching resistance to current bimodal polyethylene pipes, and therefore reduced probability for an SCG-initiating scratch to occur, would be particularly attractive. Of course any newly developed polyethylene must also be processable as indicated by a MFR$_5$ in the accepted range for pipe applications, e.g. 0.2-1.4 g/10 min.

It has now been surprisingly found that a multimodal polyethylene (preferably polyethylene having a trimodal composition and/or polyethylene having trimodal molecular weight distribution) and comprising a relatively small amount (e.g. 0.5-9.5 % wt of polyethylene) of a relatively high molecular weight ethylene copolymer exhibits this highly desirably combination of properties. Given the small amount of the relatively high molecular weight ethylene copolymer present, the degree to which the SCG is improved without deleterious effect on the other key properties (e.g. RCP, hardness, abrasion resistance, scratch resistance and processability) is astonishing. There is even evidence that SCG, hardness and scratch resistance is better when the polymer composition has a lower amount of higher molecular weight ethylene copolymer than when it has a higher amount.

A further important issue is how to manufacture the multimodal polyethylene of the invention. Such polymers may be manufactured by, for instance, extrusion blending of polymers polymerised separately or by sequential polymerisations. When sequential polymerisation is used, generally the polymers are prepared in the order of increasing molecular weight and/or increasing comonomer content or decreasing molecular weight and/or decreasing comonomer content.

SUMMARY OF INVENTION

Viewed from a first aspect, the present invention provides a polyethylene having a multimodal molecular weight distribution, comprising:

(i) 20-70% wt of a lower molecular weight ethylene homopolymer;
(ii) 20-70% wt of a first higher molecular weight ethylene copolymer; and
(iii) 0.5-9.5% wt of a second higher molecular weight ethylene copolymer, wherein said second higher molecular weight ethylene copolymer has a greater weight average molecular weight than said first higher molecular weight ethylene copolymer.

Preferably the polyethylene has a multimodal composition.

Viewed from a further aspect, the present invention provides a process for the preparation of a polyethylene as hereinbefore defined comprising polymerising ethylene and, as required, at least one other $\alpha$-olefin to yield said polyethylene, wherein said polymerisation is carried out in at least three steps.

Viewed from a further aspect, the present invention provides a polyethylene obtainable by a process as hereinbefore defined.

Viewed from a further aspect, the present invention provides a composition comprising a polyethylene as hereinbefore defined.

Viewed from a further aspect, the present. invention provides an article comprising a polyethylene as hereinbefore defined or a composition as hereinbefore defined.

In a preferred embodiment, the article is a pipe.

Viewed from a further aspect, the present invention provides a process for the preparation of an article as hereinbefore defined comprising moulding, e.g. blow moulding, a polyethylene as hereinbefore defined or a composition as hereinbefore defined.

Viewed from a further aspect, the present invention provides the use of a polyethylene as hereinbefore defined or a composition as hereinbefore defined in the manufacture of a pipe.

DETAILED DESCRIPTION OF THE INVENTION

Definitions

As used herein the term "polyethylene" refers to a polymer that comprises at least 50 % wt, still more preferably at least 75 % wt, still more preferably at least 85 % wt and yet more preferably at least 90 % wt units derived from ethylene.

As used herein the term "ethylene homopolymer" refers to a polymer which consists essentially of repeat units deriving from ethylene. Homopolymers may, for example, comprise at least 99 %, preferably at least 99.5 %, more preferably at least 99.9 % and still more preferably at least 99.95 %, e.g. 100 %, by weight of repeat units deriving from ethylene.

As used herein the term "ethylene copolymer," refers to a polymer comprising repeat units from ethylene and at least one other monomer. In typical copolymers at least 0.05 %, more preferably at least 0.1 % and still more preferably at least 0.4 % by weight of repeat units derive from at least one monomer other than ethylene. Typically ethylene copolymers will not comprise more than 15 % by weight of repeat units deriving from monomers other than ethylene.

As used herein %wt is expressed relative to the weight of polyethylene unless otherwise specified.

As used herein the terms "lower" and "higher" are used relatively. Thus a lower molecular weight ethylene polymer has a lesser molecular weight than a higher molecular weight polymer.

As used herein the term LMW polymer refers to the lower molecular weight ethylene polymer.

As used herein the term HMW1 refers to the first higher molecular weight ethylene copolymer. As used herein the term HMW2 refers to the second higher molecular weight ethylene copolymer. HMW1 and HMW2 each have higher molecular weights than the LMW polymer. HMW2 has a higher molecular weight that HMW1. Preferably therefore the polyethylene of the invention is trimodal.

Whenever the term "molecular weight" is used, the weight average molecular weight is meant unless otherwise specified.

As used herein the term "multimodal" refers to a polymer comprising a plurality of components or fractions, which have been produced under different polymerisation conditions and/or by using a multisite catalyst system (e.g. a system having more than one type of active site) in one stage or step and/or by using two or more different catalysts in a polymerisation stage or step resulting in different weight average molecular weights and molecular weight distributions for the components and/or in different comonomer contents. The prefix "multi" refers to the number of different components present in the polymer. Thus, for example, a polymer consisting of three components only is called "trimodal".

As used herein the term "multimodal composition" refers to a composition comprising a plurality of components or fractions, which are each different in composition. Preferably the components or fractions each have a different constituent composition. Thus, for example, a composition comprising an ethylene homopolymer, an ethylene copolymer comprising 0.1 % wt comonomer and an ethylene copolymer comprising 0.5 % wt comonomer is a multimodal composition, specifically a trimodal composition.

As used herein the term "multimodal molecular weight distribution" refers to the form of the molecular weight distribution curve, i.e. the appearance of the graph of the polymer weight fraction as a function of its molecular weight. A polyethylene having a multimodal molecular weight distribution can show two or more maxima or at least be distinctly broadened in comparison with the curves for the individual components. In addition, multimodality may show as a difference in melting or crystallisation temperature curves of components. In contrast a polymer comprising one component produced under constant polymerisation conditions is referred to herein as unimodal.

As used herein the term catalyst system refers to the total active entity that catalyses the polymerisations reaction. Typically the catalyst system is a coordination catalyst system comprising a transition metal compound (the active site precursor) and an activator (sometimes referred to as a cocatalyst) that is able to activate the transition metal compound.

As used herein the term "Ziegler Natta (ZN)" catalyst refers to a catalyst that preferably comprises a transition metal component (e.g. Ti) which is sigma bonded to its ligands and an activator (e.g. an Al containing organometallic compound). Preferred Ziegler Natta catalysts optionally comprise a particle building material.

As used herein the term "slurry polymerisation" refers to a polymerisation wherein the polymer forms as a solid in a liquid. The liquid may be a monomer of the polymer. In the latter case the polymerisation is sometimes referred to as a bulk polymerisation. The term slurry polymerisation encompasses what is sometimes referred to in the art as supercritical polymerisation, i.e. a polymerisation wherein the polymer is a solid suspended in a fluid that is relatively close to its critical point, or if the fluid is a mixture, its pseudocritical point. A fluid may be considered relatively close to its critical point if its compressibility factor is less than double its critical compressibility factor or, in the case of a mixture, its pseudocritical compressibility factor.

As used herein, the term "multistage polymerisation" refers to a polymerisation which is carried out in two or more stages. Generally each stage is carried out in a separate reactor. The term multistage polymerisation is used interchangeably with multistep polymerisation.

Polyethylene

The final polyethylene for processing into articles (e.g. pipes) will often contain additives such as carbon black and colourants as described below which are typically compounded into the polyethylene as a concentrated masterbatch after polyethylene synthesis is completed. The following details in relation to the polyethylene refer to the polyethylene per se and do not include any further additives unless explicitly stated.

The polyethylene of the present invention is multimodal. The polyethylene has a multimodal (e.g.trimodal) molecular weight distribution. Preferably the polyethylene has a multimodal (e.g. trimodal) composition.

The overall amount of ethylene monomer present in the polyethylene of the present invention is preferably 50-99.9 % wt, more preferably 50-99.5 % wt, still more preferably 75-99.0 % wt, e.g. 85 to 97 % wt. Particularly preferably the overall amount of ethylene monomer in the polyethylene is 92-99.8 % wt and more preferably 98 to 99.9 % wt.

The total comonomer content of the polyethylene of the present invention is preferably 0.1-10 % wt, still more preferably 0.2-5 % wt and yet more preferably 0.3-3 % wt. When it is stated herein that the amount of a given monomer present in a polymer is a certain amount, it is to be understood that the monomer is present in the polymer in the form of a repeat unit. The skilled man can readily determine what is the repeat unit for any given monomer. The comonomer is preferably one or more (e.g. one) $\alpha$-olefin. Particularly preferably the comonomer is selected from propylene, 1-butene, 1-pentene, 4-methyl-1-pentene, 1-hexene, 1-octene and mixtures thereof. Preferably, however, the $\alpha$-olefin is 1-butene.

The polyethylene of the present invention is preferably a high density polyethylene (HDPE). HDPE has the advantage of having a relatively low inherent weight, yet high mechanical strength, corrosion and chemical resistance and long-term stability. Preferably the polyethylene of the present invention has a density of 935-910 kg/m$^3$, more

preferably 935-970 kg/m$^3$, still more preferably 940-965 kg/m$^3$ and yet more preferably 945-962 kg/m$^3$.

The polyethylene of the present invention preferably has a MFR$_5$ of 0.05-2.0, more preferably 0.05-1.0, still more preferably 0.1 to 0.75 and yet more preferably 0.15 to 0.6 g/10min. This is an acceptable range of pipe applications, i.e. it ensures that the polyethylene may be extrusion moulded.

The polyethylene of the present invention preferably has a FRR (MFR$_5$/MFR$_2$) of 2.6-10, more preferably 2.9-8 and still more preferably 3-6.

The polyethylene of the present invention preferably has a melting temperature of 100-140 °C, still more preferably 110-138 °C and yet more preferably 120-135 °C.

The Mn (number average molecular weight) of the polyethylene of the present invention is preferably 1,000-50,000 g/mol, still more preferably 3,000-40,000 g/mol and yet more preferably 5,000-30,000 g/mol. The weight average molecular weight (Mw) of the polyethylene of the invention is preferably 100,000-1,000,000 g/mol, still more preferably 150,000-750,000 g/mol and yet more preferably 200,000-500,000 g/mol.

The polyethylene of the present invention is multimodal. Particularly preferably the polyethylene of the present invention is trimodal. Preferably the molecular weight distribution (Mw/Mn) of the polyethylene is 5-100, more preferably 10-50.

The multimodality and broad molecular weight distribution of the polyethylene of the present invention ensures that an attractive balance of polymer properties can be achieved. In particular the presence of a small amount, e.g. 0.5-9.5 % wt of a second higher molecular weight ethylene copolymer, and especially an ultra high weight ethylene copolymer, yields polyethylene with excellent SCG resistance as well as high resistance to RCP, scratch resistance and hardness.

Lower molecular weight polymer

The lower molecular weight polymer present in the polyethylene of the present invention is an ethylene homopolymer.

Preferably the lower molecular weight ethylene homopolymer has a density of 920-980 kg/m$^3$ and more preferably 920-970 kg/m$^3$. In some cases the lower molecular weight ethylene homopolymer preferably has a density of 930-965 kg/m$^3$ and yet more preferably 940-960 kg/m$^3$. Still more preferably, however, the lower molecular weight ethylene homopolymer has a density of 960-975 kg/m$^3$ and more preferably 967-972 kg/m$^3$.

Preferably the lower molecular weight ethylene homopolymer has a MFR$_2$ of 10-5000 g/10min, still more preferably 20-2000 g/10min and yet more preferably 50-1500 g/10min.

The lower molecular weight ethylene homopolymer preferably has a FRR (MFR$_5$/MFR$_2$) of 2.6-10, still more preferably 2.9-8 and yet more preferably 3-6.

The lower molecular weight ethylene homopolymer preferably has a melting temperature of 120-140 °C; still more preferably 125-138 °C and yet more preferably 127-135 °C.

The Mn of the lower molecular weight ethylene homopolymer is preferably 1,000-100,000 g/mol, still more preferably 1,500-80,000 g/mol and yet more preferably 2,000-60,000 g/mol, e.g. 2500-5000 g/mol. The weight average molecular weight (Mw) of the lower molecular weight ethylene homopolymer is preferably 5,000-150,000 g/mol, still more preferably 10,000-100,000 g/mol and yet more preferably 15,000-80,000 g/mol, e.g. 17000-35000 g/mol.

The Mw/Mn of the lower molecular weight ethylene homopolymer is preferably 3-18, still more preferably 4-15 and yet more preferably 5-13.

The amount of the lower molecular weight ethylene homopolymer present in the polyethylene of the present invention is preferably 30-70 % wt, more preferably 35-65 % wt, still more preferably 40-60 % wt and yet more preferably 45-55 % wt, wherein % wt is based on the weight of the polyethylene.

Preferably the lower molecular weight ethylene homopolymer is a Ziegler Natta polymer, i.e. it is prepared by Ziegler Natta catalysed polymerisation.

First higher molecular weight polymer

The first higher molecular weight polymer present in the polyethylene of the present invention is an ethylene copolymer. Preferred copolymers comprise one or more (e.g. one) $\alpha$-olefin comonomers. Preferred $\alpha$-olefin comonomers are selected from propylene, 1-butene, 1-pentene, 4-methyl-1-pentene, 1-hexene, 1-octene and mixtures thereof. Preferably the comonomer is 1-butene, i.e. preferably the first higher molecular weight polymer is an ethylene 1-butene copolymer.

The amount of ethylene monomer present in the first higher molecular weight polymer is preferably 50 to 99.9 % wt and more preferably 50-99.5 % wt. In some first higher molecular weight polymers the amount of ethylene monomer present is preferably 75-99.0 % wt, e.g. 85 to 97 % wt based on weight of the copolymer. In more preferred first higher molecular weight polymers the amount of ethylene monomer present is preferably 90-99.8 % wt and more preferably 98 to 99.7 %wt based on weight of the copolymer. The total comonomer content of the first higher molecular weight polymer is preferably 0.1-9.5 % wt, still more preferably 0.2-4.5 % wt and yet more preferably 0.3-2.5 % wt based on the weight of the copolymer. Preferably the comonomer content (based on % wt) of the first higher molecular weight polymer is more than 200 %, more preferably more than 400 % and still more preferably more than 900 % higher than that of the lower molecular weight copolymer.

Preferably the first higher molecular weight ethylene copolymer has a density of 880-960 kg/m$^3$ and more preferably 880-940 kg/m$^3$. In some embodiments the first higher molecular weight ethylene copolymer has a density of 890-930 kg/m$^3$ and yet more preferably 890-920 kg/m$^3$. More preferably, however, the first higher molecular weight ethylene copolymer has a density of 920-955 kg/m$^3$ and still more preferably 930-950 kg/m$^3$.

Preferably the first higher molecular weight ethylene copolymer has a $MFR_{21}$ of 0.1-10 g/10min, still more preferably a $MFR_{21}$ of 0.2-5 g/10min and yet more preferably a $MFR_{21}$ of 0.3-4 g/10min.

The first higher molecular weight ethylene copolymer preferably has a FRR ($MFR_5/MFR_2$) of 2.6-10, more preferably 2.8-8 and yet more preferably 3-6.

The Mn of the first higher molecular weight ethylene copolymer is preferably 10,000-150,000 g/mol, still more preferably 20,000-125,000 g/mol and yet more preferably 30,000-100,000 g/mol.

The weight average molecular weight (Mw) of the first higher molecular weight ethylene copolymer is higher than the Mw of the lower molecular weight ethylene homopolymer. Preferably the Mw of the first higher molecular weight ethylene copolymer is more than 100 %, more preferably more than 200 % and still more preferably 400 % higher than the Mw of the lower molecular weight ethylene homopolymer. The weight average molecular weight (Mw) of the first higher molecular weight ethylene copolymer is preferably 100,000-1,000,000 g/mol, still more preferably 150,000-800,000 g/mol and yet more preferably 200,000-700,000 g/mol.

The Mw/Mn of the first higher molecular weight ethylene copolymer is preferably 3-25, more preferably 4-20 and yet more preferably 5-18.

The amount of the first higher molecular weight ethylene polymer present in the polyethylene of the present invention is preferably in the range 30-70 % wt, more preferably 35-65 % wt, still more preferably 40-60 % wt and still more preferably 40 to 50 % wt, wherein % wt is based on the weight of the polyethylene.

Preferably the first higher molecular weight ethylene copolymer is a Ziegler Natta polymer, i.e. it is prepared by Ziegler Natta catalysed polymerisation.

Second higher molecular weight polymer

The second higher molecular weight polymer present in the polyethylene of the present invention is an ethylene copolymer. Preferred copolymers comprise one or more (e.g. one) α-olefin comonomers. Preferred α-olefin comonomers are selected from propylene, 1-butene, 1-pentene, 4-methyl-1-pentene, 1-hexene, 1-octene and mixtures thereof. Preferably the comonomer is 1-butene, i.e. preferably the second higher molecular weight polymer is an ethylene 1-butene copolymer.

The amount of ethylene monomer present in the second higher molecular weight polymer is preferably 50-99.5 % wt, still more preferably 75-99.0 % wt, e.g. 85 to 97 % wt based on the weight of the copolymer. The total comonomer content of the second higher molecular weight polymer is preferably 0.1-30 % wt, still more preferably 0.5-25 % wt and yet more preferably 1-20 % wt, e.g. 2-10 % wt based on the weight of the copolymer.

Preferably the second higher molecular weight ethylene copolymer has a higher % wt comonomer content than the first higher molecular weight copolymer. Preferably the comonomer content (based on wt %) of the second higher molecular weight copolymer is more than 50 % higher, more preferably more than 100 % higher and still more preferably more than 300 % higher than that of the first higher molecular weight ethylene copolymer. As the lower molecular weight ethylene polymer is a homopolymer, this provides a polyethylene having a multimodal, specifically a trimodal, composition.

Preferably the second higher molecular weight ethylene copolymer has a density of 875-935 kg/m$^3$. Some preferred second higher molecular weight ethylene copolymers have a density of 885-920 kg/m$^3$ and yet more preferably 890-915 kg/m$^3$. More preferred second higher molecular weight ethylene copolymers, however, have a density of 890-930 kg/m$^3$ and still more preferably 905-925 kg/m$^3$.

Preferably the second higher molecular weight ethylene copolymer has a $MFR_{21}$ of 0.001-40 g/10min, still more preferably 0.005-30 g/10min, yet more preferably 0.006-20 g/10min, particularly preferably 0.007-10 g/10min, e.g. 0.0075-1 g/10min.

Preferably the second higher molecular weight ethylene copolymer has a FRR ($MFR_{21}/MFR_5$) of 4.4-20, more preferably 6-18 and still more preferably 7-15.

The Mn of the second higher molecular weight ethylene copolymer is preferably 20,000-500,000 g/mol, still more preferably 30,000-400,000 g/mol and yet more preferably 40,000-300,000 g/mol.

The weight average molecular weight (Mw) of the second higher molecular weight ethylene copolymer is greater than the Mw of the first higher molecular ethylene copolymer. Still more preferably the Mw of the second higher molecular weight ethylene copolymer is 5-1250%, still more preferably 10-1000 % and yet more preferably 15-750 %, e.g. 30-300 % greater than the Mw of the first higher molecular weight ethylene copolymer. The weight average molecular weight (Mw) of the second higher molecular weight ethylene copolymer is preferably in the range 100,000-3,000,000 g/mol, still more preferably 150,000-2,500,000 g/mol, yet more preferably 200,000-2,000,000 g/mol and especially preferably 500,000-1,500,000. This polymer may be considered to be an ultra high molecular weight ethylene copolymer.

The Mw/Mn of the second higher molecular weight ethylene copolymer is preferably 3-30, more preferably 4-25 and still more preferably 5-23.

The amount of the second molecular weight ethylene copolymer present in the polyethylene of the present invention is in the range 0.5-9.5 % wt. Preferably the amount of second molecular weight ethylene copolymer is greater than 1.0 % wt, e.g. 1.2 % wt or 1.5 %wt. Preferably the amount of second molecular weight ethylene copolymer is less than 9.5 % wt, e.g. 9.0 % wt or 8.5 % wt. In some polyethylenes of the invention the amount of second molecular weight ethylene copolymer is preferably 1.2 to 8.5 % wt, more preferably 1.0-7.5 % wt, still more preferably 1.5-6.0 % wt and yet more preferably 3-6 % wt, wherein % wt is based on the weight of the polyethylene.

Without wishing to be bound by theory, it is hypothesised that the introduction of a relatively high amount of comonomer to the ethylene copolymer that is only present in a small amount means that the comonomer is incorporated into the longer chains present in the copolymer as well as its shorter chains. This means that the level of side chains present in the copolymer is increased and correspondingly that chain entanglement is also increased. These effects are both believed to contribute to the improved SCG performance. At the same time, however, because only a small amount of the polyethylene is modified in this way, there is little, if any, deleterious effect on RCP as generally observed in the prior art.

Preferably the second higher molecular weight ethylene copolymer is a Ziegler Natta polymer, i.e. it is prepared by Ziegler Natta catalysed polymerisation.

Process

The polyethylene of the present invention is prepared in a multistage polymerisation process. When a polymer is produced in a multistage process, the reactors may be in parallel or in series but arrangement in series is preferred. If the polymer components are produced in a parallel arrangement, the powders are preferably mixed and extruded for homogenisation.

Catalyst system

The polyethylene of the present invention may be prepared using a Ziegler-Natta catalyst, a single site catalyst system or a hybrid of the afore-going catalysts. Preferably, however, the polyethylene is prepared using one or more Ziegler Natta catalyst system. Preferably the polyethylene of the present invention is prepared using one Ziegler Natta catalyst system, e.g. in each stage of multistage polymerisation.

The Ziegler Natta catalyst system preferably comprises a transition metal component and an activator. Preferably, the transition metal component, when added to the polymerisation reaction is contained within solid particles. Preferably, at least some activator, sometimes referred to as cocatalyst, is added to the polymerisation reaction in the form of a liquid or solution.

Ziegler Natta catalyst system

Transition metal component

The active site of the catalyst system is a transition metal. Group 4 (e.g. Ti, Zr, Hf) or 5 (e.g. V, Nb, Ta) transition metals are preferred, particularly Group 4 metals, and especially Ti. In particularly preferred Ziegler Natta catalysts only Group 4 transition metals (e.g. Ti) are present.

During preparation of the catalyst system it is preferred to use transition metals in the form of alkoxy or halide compounds, especially chlorides. Particularly preferably Ti, at the stage of its introduction into the catalyst system preparation process, is provided as $TiCl_4$.

The content of transition metal in the final solid catalyst based on the weight of dry, solid, catalyst component is preferably 0.1-5 mmol/g.

Preferably the final solid catalyst particles also comprise a group 2 metal, preferably a magnesium compound, still more preferably a Mg-Cl compound, e.g. $MgCl_2$.

The magnesium compound may be introduced into the catalyst preparation as the Mg-Cl (e.g. $MgCl_2$ compound itself), but it is preferred to make it in situ within the catalyst preparation procedure to ensure a high degree of dispersion, contact with the transition metal and porosity. The skilled man is aware of how to carry out such an in situ reaction.

The content of Mg in the final solid catalyst based on the weight of dry, solid, catalyst component is preferably 1-25 % wt.

Particle building material

The particle building material present in the catalyst system comprising a Ziegler Natta catalyst may be an inorganic oxide support such as silica, alumina, titania, silica-alumina and silica-titania or it may be Mg or Ca compounds such as chlorides, oxychlorides, alkyls or alkoxides or metal salts with organic anions. Preferably, however, the material is silica or $MgCl_2$ with optional other components. Still more preferably the material is $MgCl_2$. This is particularly advantageous in the polymerisation to produce the second higher molecular weight ethylene copolymer.

When present, the particle building material preferably comprises 30 - 90 % wt of the final, dry, solid catalyst. If the particle building material comprises Mg-Cl compounds, then typically the building material will also function as the magnesium compound hereinbefore described. If the particle building material is a metal oxide, the metal oxide particles typically define the final catalyst system outer morphology and the other components of the catalyst system will be synthesised inside its pores.

Activator and additional components

The activator is a compound that is capable of activating the transition metal component. It is sometimes referred to as a cocatalyst. Useful activators are, amongst others, aluminium alkyls and aluminium alkoxy compounds. Especially preferred activators are aluminium alkyls, in particular, aluminium trialkyls (e.g. trimethyl aluminium, triethyl aluminium and tri-isobutyl aluminium). The activator is preferably used in excess to the transition metal component. For instance, when an aluminium alkyl is used as an activator, the molar ratio of the aluminium in the activator to the transition metal in the transition metal component is preferably from 1 to 500 mol/mol, preferably 2 to 100 mol/mol, e.g. 5 to 50 mol/mol. The activator is typically not part of the solid, particulate catalyst but added to the polymerisation reactor as a liquid.

The catalyst system comprising a Ziegler Natta catalyst may additionally comprise co-activators and/or modifiers. Thus, for example, two or more alkyl aluminium compounds as described above may be used and/or the catalyst system components may be combined with different types of ethers, esters, silicon ethers etc to modify the activity and/or selectivity of the catalyst system as is known in the art.

Catalyst system preparation

The catalyst system comprising a Ziegler Natta catalyst may be prepared by procedures known in the art, e.g. as disclosed in US6828267, US4081674 and US4792588.

The solid catalyst system particles may optionally be washed prior to use to remove non bonded transition metal. In the final catalyst system particle added to the polymerisation, only very minor amounts of transition metal should be extractable in alkanes at 80 °C.

The average particle size of the catalyst system particles is preferably in the range 1 to 250 $\mu$m, more preferably 4 to 100 $\mu$m, still more preferably 6 to 30 $\mu$m, e.g. 10 to 25 $\mu$m. The particles are preferably spherical.

The surface area of the catalyst system particles is preferably in the range 1-500 $m^2$/g, more preferably 2-300 $m^2$/g. The pore volume of the catalyst system particles is preferably in the range 0.1-5 $cm^3$/g, preferably 0.2-1.5 $cm^3$/g.

Single site catalyst system

General single site catalyst

The catalyst system comprising a single site catalyst that may be used in the process of the present invention is preferably a metallocene-containing catalyst system. Such catalyst systems are well known in the art, e.g. from WO98/02246.

The catalyst system may be supported or unsupported, but is preferably supported. Supported catalyst systems may be prepared by impregnating the active site precursors into it. Alternatively the catalyst system may be synthesised by producing the solid particles from liquid starting material components directly, without a separate impregnation step. Preferred catalyst systems comprising a single site catalyst comprise a carrier.

The catalyst system comprising a single site catalyst preferably comprises a carrier, an activator and at least one transition metal active site precursor (e.g. a metallocene). The activator may be aluminoxane, borane or borate but preferably is aluminoxane. Preferably the active site precursor is a metallocene.

Catalyst morphology and carrier

The catalyst system comprising a single site catalyst is preferably in particulate form. Preferably the catalyst system is in the form of particles having a weight average particle size of 1 to 250 microns, preferably 4 to 150 microns. Preferably the catalyst system is in the form of a free-flowing powder.

Suitable carrier materials for use in the catalyst system comprising a single site catalyst are well known in the art. The carrier material is preferably an inorganic material, e.g. an oxide of silicon and/or of aluminium or $MgCl_2$. Preferably the carrier is an oxide of silicon and/or aluminium. Still more preferably the carrier is silica.

Preferably the carrier particles have an average particle size of 1 to 500 microns, preferably 3 to 250 microns, e.g. 10 to 150 microns. Particles of appropriate size can be obtained by sieving to eliminate oversized particles. Sieving can be carried out before, during or after the preparation of the catalyst system. Preferably the particles are spherical. The surface area of the carrier is preferably in the range 5 to 1200 $m^2/g$, more preferably 50 to 600 $m^2/g$. The pore volume of the carrier is preferably in the range 0.1 to 5 $cm^3/g$, preferably 0.5-3.5 $cm^3/g$.

Preferably the carrier is dehydrated prior to use. Particularly preferably the carrier is heated at 100 to 800 °C, more preferably 150 to 700 °C, e.g. at about 250 °C prior to use. Preferably dehydration is carried out for 0.5-12 hours.

Carriers that are suitable for the preparation of the catalyst systems herein described are commercially available, e.g. from Grace and PQ Corporation.

Activator

Aluminoxane is preferably present in the catalyst system as activator. The aluminoxane is preferably oligomeric. Still more preferably the aluminoxane is a cage-like (e.g. multicyclic) molecule, e.g. with an approximate formula $(Al_{1}.4R_{0.8}O)_n$ where n is 10-60 and R is an alkyl group, e.g. a $C_{1-20}$ alkyl group. In preferred aluminoxanes R is a $C_{1-8}$ alkyl group, e.g. methyl. Methylaluminoxane (MAO) is a mixture of oligomers with a distribution of molecular weights, preferably with an average molecular weight of 700 to 1500. MAO is a preferred aluminoxane for use in the catalyst system.

The aluminoxane may be modified with an aluminium alkyl or aluminium alkoxy compound. Especially preferred modifying compounds are aluminium alkyls, in particular, aluminium trialkyls such as trimethyl aluminium, triethyl aluminium and tri isobutyl aluminium. Trimethyl aluminium is particularly preferred.

Aluminoxanes, such as MAO, that are suitable for the preparation of the catalyst systems herein described are commercially available, e.g. from Albemarle and Chemtura.

It is also possible to generate the activator in situ, e.g. by slow hydrolysis of trimethylaluminium inside the pores of a carrier. This process is well known in the art.

Alternatively, activators based on boron may be used. Preferred boron based activators are those wherein the boron is attached to at least 3 fluorinated phenyl rings as described in EP520732.

Alternatively, an activating, solid surface as described in US 7312283 may be used as a carrier. These are solid, particulate inorganic oxides of high porosity which exhibit Lewis acid or Bronsted acidic behaviour and which have been treated with an electron-withdrawing component, typically an anion, and which have then been calcined.

Transition metal active site precursor

Generally the metal of the transition metal precursors are 16-electron complexes, although they may sometimes comprise fewer electrons, e.g. complexes of Ti, Zr or Hf.

The active site transition metal precursor is preferably a metallocene.

The metallocene preferably comprises a metal coordinated by one or more η-bonding ligands. The metal is preferably Zr, Hf or Ti, especially Zr or Hf. The η-bonding ligand is preferably a η5-cyclic ligand, i.e. a homo or heterocyclic cyclopentadienyl group optionally with fused or pendant substituents. Two of the η-bonding ligands may be bridged.

The preparation of metallocenes can be carried out according to, or analogously to, the methods known from the literature and is within the skills of a polymer chemist.

Other types of single site precursor compounds are described in:

G.J.P. Britovsek et al.: The Search for New-Generation Olefin Polymerization Catalysts: Life beyond Metallocenes, Angew. Chemie Int. Ed., 38 (1999), p. 428.
H. Makio et al.: FI Catalysts: A New Family of High Performance Catalysts for Olefin Polymerization, Advanced Synthesis and Catalysis, 344 (2002), p. 477.
Dupont-Brookhart type active site precursors are disclosed in US5880241.

Catalyst system preparation

The preparation of single site catalyst systems can be carried out according to to methods known in the art. For example, methods of supporting single site catalysts via a preformed carrier and aluminoxane are given in EP279863, WO93/23439, EP 793678, WO96/00245, WO 97/29134. Alternative methods of supporting single site catalysts via preformed carriers and boron activators are given inWO91/09882 and WO 97/31038. Methods of obtaining particulate catalyst systems without employing preformed carriers are given in EP 810344 and EP 792297.

The use of Ziegler Natta catalyst is preferred over single site catalyst because with Ziegler Natta catalysts it is usually easier to achieve the combination of very high molecular weight and relatively high comonomer incorporation that is targeted in one of the polymerisation steps.

Multistep polymerisation processes

The polyethylene of the present invention is prepared in a multistage polymerisation process, wherein the polymerisation is carried out in at least three steps. Preferably the polyethylene is prepared in three stages or steps, still more preferably in three different reactors. Preferably the process is semi-continuous or continuous.

The polyethylene of the present invention may be prepared by, for example, slurry, gas and/or solutions polymerisation reactions. Gas phase polymerisation and slurry phase polymerisation are collectively referred to as particle form polymerisation. Preferably the process of the present invention comprises particle form polymerisation. Still more preferably the polyethylene of the present invention is prepared by slurry polymerisation reactions. The polymerisation is preferably carried out in conventional circulating loop or stirred tank reactors, preferably in stirred tank reactors. The diluent is preferably a hydrocarbon of 3 - 10 carbon atoms. Preferably, it is n-hexane or isobutane. Most preferably, it is n-hexane.

When present, the comonomer is preferably an alpha olefin of 3 - 10 carbon atoms. Preferably, it is propylene, n-butene, n-pentene, 4-methyl-pentene-1, n-hexene or n-octene. If the diluent is n-hexane, then preferably the comonomer is propylene, n-butene, n-pentene or 4-methyl-pentene-1. More preferably, the comonomer is n-butene or n-pentene and most preferably it is n-butene. If the diluent is isobutane, then preferably the comonomer is n-butene, n-pentene, 4-methyl-pentene-1, hexene or 1-octene. More preferably, the comonomer is n-butene, n-pentene, n-hexene or n-octene, and most preferably it is n-hexene.

General slurry polymerisation conditions

The conditions for carrying out slurry polymerisations are well established in the art. The reaction temperature is preferably in the range 30 to 120 °C, e.g. 50 to 100 °C. The reaction pressure will preferably be in the range 1 to 100 bar, e.g. 10 to 70 bar or 2 to 50 bar. The total residence time in the reactors is preferably in the range 0.5 to 6 hours, e.g. 1 to 4 hours. The diluent used will generally be an aliphatic hydrocarbon having a boiling point in the range -70 to 100 °C. Preferred diluents include n-hexane, isobutane and propane, especially n-hexane.

Hydrogen is also preferably fed into at least one, and more preferably at least two, of the reactors to function as a molecular weight regulator. When used, the ratio of partial pressures in the reactors between hydrogen and ethylene is 0.001-5.

Preferably the polymerisation reactions are carried out as a continuous or semi-continuous process. Thus monomers, diluent and hydrogen are preferably fed continuously or semi-continuously into the reactor. Additionally the slurry from any previous reactor may be fed continously or semi-continuously. Preferably the catalyst system, when a direct feed is required, is also fed continuously or semi-continuously into the reactor. Still more preferably polymer slurry is continuously or semi-continuously removed from the reactor. By semi-continuously is meant that addition and/or removal is controlled so they occur at relatively short time intervals compared to the polymer residence time in the reactor, e.g. between 20 seconds to 2 minutes, for at least 75 % (e.g. 100 %) of the duration of the polymerisation.

Preferably the concentration of polymer present in the reactor during polymerisation is in the range 15 to 55 % wt based on total, e.g. slurry, more preferably 25 to 50 % wt based on total, e.g. slurry. Such a concentration can be maintained by controlling the rate of addition of monomer, the rate of addition of diluent (if present) and catalyst system and, to some extent, the rate of removal of polymer e.g. polymer slurry from the, e.g. slurry reactor.

Gas phase polymerisation conditions

The conditions for carrying out gas phase polymerisation are well established in the art. Each reactor system typically comprises a reactor and a gas recycle and cooling system, wherein the recycle and cooling system optionally condenses part of the gas. The reaction temperature is preferably in the range 50 to 125 °C, e.g. 70 to 120 °C. The reaction pressure is preferably in the range 1 to 100 bar, e.g. 10 to 30 bar. The total residence time in the reactors is preferably in the range 2 to 9 hours, e.g. 3 to 7 hours. Inert gases such as as nitrogen and low boiling alkanes, e.g. isopentane, are preferably present.

Hydrogen is also preferably fed into at least two of the reactor systems to function as a molecular weight regulator. When used, the ratio of partial pressures in the reactors between hydrogen and ethylene is preferably 0.001-5.

Preferably the polymerisation reactions are carried out as a continuous or semi-continuous process. Thus monomers, hydrogen, nitrogen and volatile hydrocarbons are preferably fed continuously or semi-continuously into the reactor system. Also the polymer powder from any previous reactor is preferably fed continuously or semi-continuously. Preferably the catalyst system, when a direct feed is required, is also fed continuously or semi-continuously into the reactor. Still more preferably polymer is continuously or semi-continuously removed from the reactor. By semi-continuously is meant that addition and/or removal is controlled so they occur at relatively short time intervals compared to the polymer residence time in the reactor, e.g. between 20 seconds to 5 minutes, for at least 75 % (e.g. 100 %) of the duration of the polymerisation.

Particle form processes may be of hybrid nature, comprising both slurry and gas phase reactors.

Solution polymerisation process

In this type of process, the polymer is in solution, preferably in a $C_{6-10}$ saturated hydrocarbon liquid, in the reactors. The temperature is preferably in the range 90 - 320 ºC. Preferably the temperature increases for each polymerisation step. The reaction pressure is preferably in the range 20 to 200 bar. Preferably the reaction pressure decreases for each step. The total residence time in the reactors is preferably 3 minutes to 1.5 hours. The solvent is preferably removed from the polymer by devolatilisation from the polymer melt.

First preferred process

One preferred process comprises the sequential steps (a)-(c):

(a) polymerising ethylene in a first reactor to produce a lower molecular weight ethylene (LMW) homopolymer;
(b) polymerising ethylene and an $\alpha$-olefin comonomer in a second reactor to produce a first higher molecular weight ethylene copolymer (HMW1); and
(c) polymerising ethylene and an $\alpha$-olefin comonomer in a third reactor to produce a second higher molecular weight ethylene copolymer (HMW2).

In a first preferred process of the invention, themultimodal polyethylene is prepared by preparing its ethylene polymer components in sequence from lowest molecular weight to highest molecular weight, i.e. the molecular weight of the components increases in the order LMW<HMW1<HMW2. In a further preferred process, the multimodal polyethylene is prepared by preparing its ethylene polymer components in sequence from lowest comonomer content to highest comonomer content, i.e. the comonomer content of the components increases in the order LMW<HMW1<HMW2. In this latter case the LMW polymer will generally also be the lowest molecular weight polymer, but either of HMW1 or HMW2 may be the highest molecular weight polymer. Preferably HMW2 has the highest comonomer content and the highest molecular weight.

In a preferred process, during said polymerisation to produce a first higher molecular weight ethylene copolymer, at least some of said lower molecular weight ethylene homopolymer is present in said second reactor. In a further preferred process only a portion of the lower molecular weight ethylene homopolymer is present in the second reactor. Preferably the other portion of the lower molecular weight ethylene homopolymer is transferred directly to the polymerisation of the second higher molecular weight ethylene copolymer in the third reactor. In a particularly preferred process, during said polymerisation to produce a second higher molecular weight ethylene copolymer, said lower molecular weight ethylene homopolymer and said first higher molecular weight ethylene copolymer, are present in said third reactor.

In this preferred process essentially all of the catalyst used in the reactors is preferably fed to first (LMW) reactor. The first reactor is also preferably fed with ethylene and hydrogen. Diluent or solvent is also preferably fed if the first reactor is a slurry or solution phase reactor respectively. Preferably the conditions for carrying out the polymerisation in the first reactor are as follows:

| | |
|---|---|
| Temperature: | 50 to 270 °C, more preferably 60 to 120 °C, still more preferably 50 to 100 °C, yet more preferably 70 to 90 °C |
| Pressure: | 1 to 220 bar, preferably 1 to 60 bar, more preferably 1 to 20 bar, still more preferably 5 to 15 bar |
| Partial pressure of ethylene: | 1-200 bar, preferably 1-15 bar, more preferably 1-10 bar, still more preferably 2-10 bar |

(continued)

| Residence time: | 1 minute to 6 hours, preferably 0.5 to 4 hours, more preferably 1-2 hours |
| Diluent/solvent: | Either absent (for gas phase) or $C_{4-10}$ saturated alkane, preferably hexane or isobutane as diluent |
| Partial pressure ratio of $H_2$: | ethylene: 5:1 to 0.5:1, preferably 3:1 to 1:1 |

The polymerisation in the first reactor preferably produces 30 - 70 % wt of the total polyethylene, more preferably 35 - 65 % wt, still more preferably 40-60 % wt and most preferably 45 - 55 % wt.

The flow out of first (LMW) reactor is preferably directed to the second reactor. Preferably 100 % of flow goes to the second reactor. The most volatile components are preferably removed from the outgoing flow of the first reactor such that more than 80 % of the hydrogen, more preferably at least 90 % of the hydrogen, is removed before the flow enters the second reactor.

The second reactor is fed with ethylene, comonomer and optionally hydrogen. Diluent or solvent is additionally preferably fed if the second reactor is a slurry or solution phase reactor respectively. The pressure is preferably lower in the second reactor than in the first reactor. Preferably the conditions for carrying out the polymerisation in the second reactor are as follows:

| Temperature: | 50 to 290 °C, preferably 50 to 100 °C, more preferably 60 to 100 °C, still more preferably 70 to 90 °C |
| Pressure: | 1 to 200 bar, preferably 1 to 60 bar, more preferably 1 to 15 bar, still more preferably 2 to 15 bar, yet more preferably 2 to 10 bar |
| Partial pressure of ethylene: | 0.2-200 bar, preferably 0.5 to 15 bar, more preferably 0.5-6 bar, e.g. 0.7 to 6 bar |
| Residence time: | 1 minute to 4 hours, preferably 0.5 to 4 hours, more preferably 0.5 to 3 hours, yet more preferably preferably 1-2 hours |
| Diluent/solvent: | Either absent (for gas phase) or $C_{4-10}$ saturated alkane, preferably hexane or isobutane as diluents. |
| Partial pressure ratio of $H_2$:ethylene: | 0.01:1 to 0.5:1, preferably 0.02:1 to 0.2:1 |
| Ratio of partial pressure of comonomer: | ethylene in reactor: 0.0001:1 to 0.01:1, preferably 0.003:1 to 0.005:1 |

Preferably the comonomer is 1-butene.

In the second reactor, 30 - 70 % wt of the total polyethylene is preferably made, more preferably 35 - 65 % wt, still more preferably 40-60 % wt and most preferably 40 - 50 % wt.

Essentially all of the flow out of second reactor is preferably fed into the third reactor. The hydrogen is preferably removed. To the third reactor is fed ethylene and comonomer. Diluent or solvent is additionally preferably fed if the third reactor is a slurry or solution phase reactor respectively. Preferably the conditions for carrying out the polymerisation in the third reactor are as follows:

| Temperature: | 50 to 320 °C, more preferably 50 to 100 °C, still more preferably 60 to 100 °C, yet more preferably 70 to 90 °C |
| Pressure: | 0.5 to 220 bar, more preferably 1 to 60 bar, still more preferably 1 to 10 bar, preferably 1.5 to 7 bar |
| Partial pressure of ethylene: | 0.2 to 200 bar, more preferably 0.25 to 10 bar, still more preferably 0.3-4 bar |
| Residence time: | 0.2 minutes to 2 hours, preferably 2 minutes to 1 hour, more preferably 5 to 30 minutes |
| Diluent/solvent: | Either absent (gas phase) or $C_{4-10}$ saturated alkane, preferably hexane or isobutane as diluent |
| Partial pressure ratio of $H_2$: | ethylene: 0.000:1 to 0.05:1, preferably 0.000:1 to 0.01:1 |
| Ratio of partial pressure of comonomer: | ethylene in reactor: 0.001:1 to 0.2:1, preferably 0.003:1 to 0.03:1 |

Preferably the comonomer is 1-butene.

The molar ratio between comonomer and ethylene in the third reactor is preferably 1.5-20 times, more preferably 2-15 times, and still more preferably 3-10 times higher, than the molar ratio between comonomer and ethylene in the second reactor.

In the third reactor, 0.5 - 9.5 % wt of the total polyethylene is preferably made. Preferably at least 1.0 % wt, e.g. 1.2 % wt or 1.5 %wt of the total polyethylene is made in the third reactor. Preferably less than 9.5 % wt, e.g. 9.0 % wt or 8.5 % wt of the total polyethylene is made in the third reactor. Particularly preferably 1.2 to 8.5 % wt, more preferably 1.0 - 7.5 % wt, still more preferably 1.5-6 % wt and most preferably 3 - 6 % wt of the total polyethylene is made.

Following polymerisation in the third reactor the polyethylene is preferably obtained by centrifugation or flashing.

Preferred features of the polymers, i.e. the first lower molecular weight ethylene homopolymer and the first and second higher molecular weight ethylene copolymers, prepared in this process are as described above.

Optionally, the polymerisation of the second and third reactor may be performed as polymerization in different zones with different polymerisation conditions within a single reactor shell. However, this is not preferred.

Second preferred process

In a second preferred process of the invention the polyethylene is prepared by preparing its ethylene polymer components in the sequence lower molecular weight ethylene homopolymer, second higher molecular weight ethylene copolymer and then first higher molecular weight ethylene copolymer.

This preferred process comprises the sequential steps (a)-(c):

(a) polymerising ethylene in a first reactor to produce a lower molecular weight ethylene homopolymer (LMW);
(b) polymerising ethylene and an $\alpha$-olefin comonomer in a second reactor to produce a second higher molecular weight ethylene copolymer (HMW2); and
(c) polymerising ethylene and an $\alpha$-olefin comonomer in a third reactor to produce a first higher molecular weight ethylene copolymer (HMW1).

In the second preferred process of the invention, the multimodal polyethylene is preferably prepared by preparing its ethylene polymer components in sequence lowest molecular weight, highest molecular weight and then second highest molecular weight, i.e. the molecular weight of the components increases in the order LMW<HMW1<HMW2. In a further preferred second process, the multimodal polyethylene is prepared by preparing its ethylene polymer components in sequence lowest comonomer content, highest comonomer content and then second highest comonomer content, i.e. the comonomer content of the components increases in the order LMW<HMW1<HMW2. In this latter case the LMW polymer will generally also be the lowest molecular weight polymer, but either of HMW1 or HMW2 may be the highest molecular weight polymer. Preferably HMW2 has the highest comonomer content and the highest molecular weight.

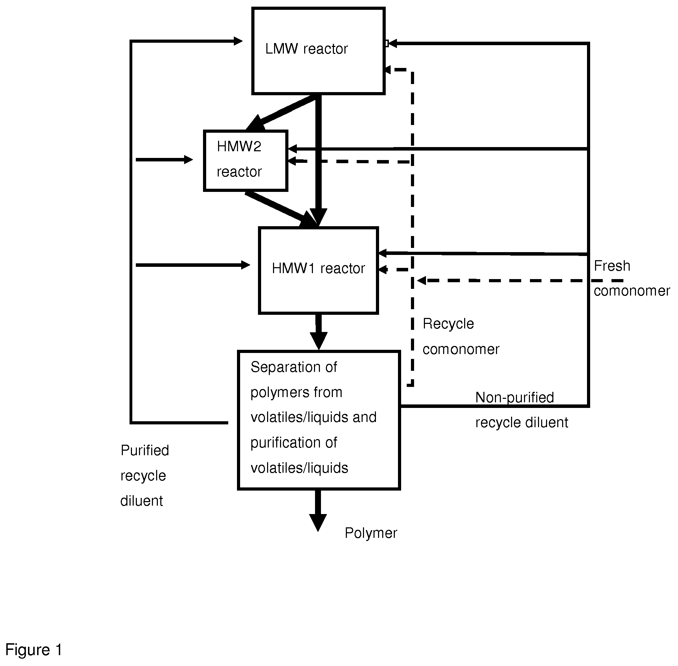

This preferred process is shown in Figure 1 which is discussed in more detail below.

In a preferred process, during said polymerisation to produce a second higher molecular weight ethylene copolymer, at least some of said lower molecular weight ethylene homopolymer is present in the second reactor. In a further preferred process only a portion of the lower molecular weight ethylene homopolymer is present in the second reactor. Preferably the other portion of the lower molecular weight ethylene homopolymer is transferred directly to the polymerisation of the first higher molecular weight ethylene copolymer in the third reactor. In a further preferred process, during said polymerisation to produce a first higher molecular weight ethylene copolymer, said lower molecular weight ethylene homopolymer and said second higher molecular weight ethylene copolymer, are present in the third reactor.

In this preferred process essentially all of the catalyst used in the reactors is preferably fed to the first reactor. To the first reactor is also preferably fed ethylene and hydrogen. Diluent or solvent is also preferably fed if the first reactor is a slurry or solvent reactor respectively. Preferably the conditions for carrying out the polymerisation in the first reactor are as follows:

| | |
|---|---|
| Temperature: | 50 to 270 °C, more preferably 50 to 120 °C, more preferably 50 to 100 °C, still more preferably 70 to 90 °C |
| Pressure: | 1 to 220 bar, preferably 1 to 70 bar, more preferably 1 to 20 bar, still more preferably 2 to 50 bar, still more preferably 3 to 20 bar, e.g. 5 to 15 bar |
| Partial pressure of ethylene: | 0.2 to 200 bar, more preferably 0.5 to 15 bar, still more preferably 1-10 bar, e.g. 2-10 bar |
| Residence time: | 1 minute to 6 hours, preferably 0.5 to 4 hours, more preferably 1-2 hours |
| Diluent/solvent: | Either absent (for gas phase) or $C_{4-10}$ saturated alkane, preferably hexane or isobutane as diluents, and still more preferably hexane as diluent |
| Partial pressure ratio of $H_2$: | ethylene: 5:1 to 0.5:1, preferably 3:1 to 1:1 |

The polymerisation in the first reactor preferably produces 30 - 70 % wt of the total polyethylene, more preferably 35 - 65 % wt, still more preferably 40-60 % wt and most preferably 45 - 55 % wt.

The flow out of first reactor (after removing hydrogen) may all be transferred to the second reactor. More preferably however it is split between going directly to the third reactor and going via the second reactor. Preferably 5 - 100 % of flow goes via the second reactor, more preferably 10 - 70 %, most preferably 15 - 50 %, for example 20 - 40%. Optionally unwanted compounds are removed from the flow. The most volatile components are preferably removed from the outgoing flow of the first reactor, e.g. such that more than 96 % of the hydrogen is removed before the flow enters the second reactor and more than 80 % of the hydrogen is removed before flow enters third reactor directly. The flow entering the second reactor and the flow entering the third reactor directly therefore comprises mainly polyethylene and diluent. Preferably substantially all (e.g. all) of the hydrogen is removed before the flow is split. The optional split may be achieved using control via mass flow measurements of, e.g. the slurry, and/or using volumetric feeders or switch flow between the second and third reactors in short sequences.

To the second reactor is fed ethylene and comonomer. A significant fraction of the comonomer feed is preferably nonpurified recycle stream from the third reactor. Diluent or solvent is preferably fed if the second reactor is slurry phase or solution phase respectively. Optionally hydrogen is also fed to the reactor. Preferably the conditions for carrying out polymerisation in the second reactor are as follows:

| | |
|---|---|
| Temperature: | 50 to 290 °C, preferably 55 to 120 °C, more preferably 50 to 100 °C, e.g. 60 to 100 °C, yet more preferably 70 to 90 °C |
| Pressure: | 0.5 to 220 bar, preferably 0.75 to 70 bar, more preferably 1 to 50 bar, still more preferably 1 to 16 bar, e.g. 5 to 11 bar |
| Partial pressure of ethylene: | 0.2 to 200 bar, preferably 0.3 to 10 bar, more preferably 0.3-4 bar |
| Partial pressure ratio of $H_2$:ethylene: | 0.000:1 to 0.05:1, preferably 0.000:1 to 0.01:1 |
| Residence time: | 0.2 minutes to 1 hour, preferably 1 minute to 1 hour, preferably 2 to 20 minutes |
| Diluent: | Either absent (for gas phase) or $C_{4-10}$ saturated alkane, more preferably hexane or isobutane as diluents, and still more preferably hexane as diluent |
| Ratio of partial pressure of comonomer:ethylene in reactor: | 0.001:1 to 0.2:1, preferably 0.003:1 to 0.03:1 |

Preferably the comonomer is 1-butene, 1-pentene, 1-hexene or 1-octene and most preferably 1-butene.

In the second reactor, 0.5 - 9.5 % wt of the total polymer is preferably made. Preferably at least 1.0 % wt, e.g. 1.2 % wt or 1.5 %wt of the total polyethylene is made in the second reactor. Preferably less than 9.5 % wt, e.g. 9.0 % wt or 8.5 % wt of the total polyethylene is made in the second reactor. Particularly preferably 1.2 to 8.5 % wt, more preferably 1.0 - 7.5 % wt, still more preferably 1.5-6 % wt and most preferably 3 - 6 % wt of the total polyethylene is made.

Essentially all of the polymer flow out of second reactor is preferably fed into the third reactor. This flow comprises mainly polyethylene and diluent. Optionally volatiles are partially removed from the flow before it enters the third reactor, e.g. volatile comonomer (e.g. 1-butene) may be removed from the flow. Any polymer flow out of the first reactor that does not enter the second reactor is also preferably fed into the third reactor.

To the third reactor is fed ethylene, comonomer and hydrogen. Diluent or solvent is preferably fed if the third reactor is slurry phase or solution phase respectively. Preferably the major amount of the comonomer feed comes with the polymer from the second reactor. Preferably the conditions for carrying out the polymerisation in the third reactor are as follows:

| | |
|---|---|
| Temperature: | 50 to 320 °C, preferably 50 to 120 °C, more preferably 50 to 100 °C and still more preferably 70 to 90 °C |
| Pressure: | 1 to 220 bar, preferably 1 to 70 bar, more preferably 1 to 50 bar, still more preferably 1 to 15 bar, and still more preferably 2 to 10 bar |
| Partial pressure of ethylene: | 0.4-200 bar, more preferably 0.5 to 15 bar, still more preferably 0.5-6 bar |
| Residence time: | 1 minute to 4 hours, preferably 0.5 to 4 hours, more preferably 1-2 hours |
| Diluent: | Either absent (for gas phase) or $C_{4-10}$ saturated alkane, more preferably hexane or isobutane as diluents, still more preferably hexane as diluent |
| Partial pressure ratio of $H_2$:ethylene: | 0.01:1 to 0.5:1, preferably 0.02:1 to 0.2:1 |

(continued)

| Ratio of partial pressure of comonomer: | ethylene in reactor: 0.0001:1 to 0.01:1, preferably 0.0003:1 to 0.005:1 |
| --- | --- |

Preferably the comonomer is 1-butene, 1-pentene, 1-hexene or 1-octene and still more preferably 1-butene.

The molar ratio comonomer/ethylene is preferably 5-90 % of that in the second reactor, more preferably 10-40 % of that in the second reactor. The pressure is preferably lower in the third reactor than in the second reactor.

In the third reactor, 30 - 70 % wt of the total polymer is preferably made, more preferably 35 - 65 % wt, still more preferably 40-60 %wt and most preferably 40 - 50 % wt.

Optionally a portion or part of the flow leaving the third reactor is recycled to the second reactor.

Following polymerisation in the third reactor the polyethylene is preferably obtained by centrifugation or flashing.

Preferred features of the polymers, i.e. the first lower molecular molecular weight ethylene homopolymer and the first and second higher molecular weight ethylene copolymers, prepared in this process are as described above.

This polymerisation is generally applicable to the preparation of multimodal, e.g. trimodal, polyethylene. Thus, we also describe herein a process for the preparation of a polyethylene comprising:

(i) 20-70 % wt of a lower molecular weight ethylene polymer;

(ii) 20-70 % wt of a first higher molecular weight ethylene polymer; and

(iii) 0.5-30 % wt of a second higher molecular weight ethylene polymer,

wherein said process comprises the sequential steps (a)-(c):

(a) polymerising ethylene and optionally an $\alpha$-olefin comonomer in a first reactor to produce a lower molecular weight ethylene (LMW) polymer;

(b) polymerising ethylene and optionally an $\alpha$-olefin comonomer in a second reactor to produce a second higher molecular weight ethylene (HMW2) polymer; and

(c) polymerising ethylene and optionally an $\alpha$-olefin comonomer in a third reactor to produce a first higher molecular weight ethylene (HMW1) polymer.

Preferably the polyethylene is multimodal. Preferably the polyethylene has a multimodal molecular weight distribution. Preferably the polyethylene has a multimodal composition.

In this process the polyethylene is prepared by preparing its ethylene polymer components in the sequence lower molecular weight ethylene polymer, second higher molecular weight ethylene copolymer and then first higher molecular weight ethylene copolymer. Preferably the (e.g. multimodal) polyethylene is prepared by preparing its ethylene polymer components in sequence lowest molecular weight, highest molecular weight and then second highest molecular weight, i.e. the molecular weight of the components increases in the order LMW<HMW1<HMW2. In a further preferred second process, the (e.g. multimodal) polyethylene is prepared by preparing its ethylene polymer components in sequence lowest comonomer content, highest comonomer content and then second highest comonomer content, i.e. the comonomer content of the components increases in the order LMW<HMW1<HMW2. In this latter case the LMW polymer will generally also be the lowest molecular weight polymer, but either of HMW1 or HMW2 may be the highest molecular weight polymer. Preferably HMW2 has the highest comonomer content and the highest molecular weight.

In a preferred process, during said polymerisation to produce a second higher molecular weight ethylene copolymer, at least some said lower molecular weight ethylene polymer is present in said second reactor. In a further preferred process only a portion of the lower molecular weight ethylene copolymer is present in the second reactor. Preferably the other portion of the lower molecular weight ethylene polymer is transferred directly to the polymerisation of the first higher molecular weight ethylene copolymer in the third reactor. In a further preferred process, during said polymerisation to produce a first higher molecular weight ethylene copolymer, said lower molecular weight ethylene polymer and said second higher molecular weight ethylene copolymer, are present in said third reactor. Thus any lower molecular weight ethylene polymer that is not present in said second reactor preferably passes directly to the third reactor.

Optionally, the polymerisation of the second and third reactor may be performed as polymerization in different zones with different polymerisation conditions within a single reactor shell. However, this is not preferred.

Following polymerisation in the third reactor the polyethylene is preferably obtained by centrifugation or flashing.

In such processes, the lower molecular weight ethylene polymer is preferably an ethylene homopolymer. Preferably the first higher molecular weight ethylene polymer is an ethylene copolymer. Preferably the second higher molecular weight ethylene polymer is an ethylene copolymer. Preferably the amount of said second higher molecular weight ethylene polymer is 0.5 to 30 % wt, more preferably 1 to 15 % wt, still more preferably 1.5 to 9.5 % wt and still more preferably 1.2 to 8.5 % wt, e.g. 1.5-6 % wt.

In such processes, preferably the second higher molecular weight ethylene polymer has a higher % wt comonomer content than the first higher molecular weight ethylene polymer. Preferably the second higher molecular weight ethylene copolymer has a comonomer content of 1 to 20 % wt. Preferably the second higher molecular weight copolymer comprises one or more $\alpha$-olefin comonomers, particularly preferably selected from propylene, 1-butene, 1-pentene, 4-methyl-1-pentene, 1-hexene, 1-octene and mixtures thereof. Particularly preferably the second higher molecular weight copolymer is an ethylene 1-butene copolymer.

In such processes, preferably the first higher molecular weight ethylene copolymer has a comonomer content of 0.3 to 2.5 %wt. Preferably the first higher molecular weight copolymer comprises one or more $\alpha$-olefin comonomers, e.g. selected from propylene, 1-butene, 1-pentene, 4-methyl-1-pentene, 1-hexene, 1-octene and mixtures thereof. Particularly preferably the first higher molecular weight copolymer is an ethylene 1-butene copolymer.

In such process, preferably the second higher molecular weight copolymer has a greater weight average molecular weight than said first higher molecular weight copolymer. Preferably the second higher molecular weight copolymer has a weight average molecular weight of 200,000 to 2,000,000 g/mol. Preferably the first higher molecular weight copolymer has a weight average molecular weight of 200,000 to 700,000 g/mol.

In such processes preferably the first higher molecular weight copolymer is present in an amount of 40-60 % wt. Preferably the lower molecular weight ethylene polymer is an ethylene homopolymer. Preferably the lower molecular weight ethylene polymer has a $MFR_2$ of 50-4000 g/10min.

In such processes, preferably the polyethylene has a density of 945-962 kg/m$^3$ and/or a $MFR_5$ of 0.15-0.6 g/10min.

In such processes preferably each polymerisation is with a Ziegler Natta catalyst.

Further preferred characteristics of each polymer component and the polyethylene are as described above. Additionally the preferred conditions for carrying out each polymerisation stage are as described above in relation to the second preferred process.

The preferred process of the invention is shown schematically in Figure 1. Figure 1 shows how the flow from the first (LMW polymer) reactor is split between the second (HMW2 polymer) reactor and the third (HMW1 polymer) reactor. Figure 1 also shows how this process advantageously enables diluent and/or comonomer to be recycled. The dashed lines in Figure 1 illustrate recycling of comonomer separated from polyethylene product into each of the reactors. The thin solid lines in Figure 1 illustrate recycling of diluent, either in purified or non-purified form. As used herein, non-purified diluent refers to diluent wherein wax (PE fraction soluble in hexane) has not been removed and comonomer has not been completely removed. In contrast hydrogen may optionally and is preferably removed, e.g. prior to recycling to the third reactor. Correspondingly, by purified diluent is meant diluent which is essentially free of wax and comonomer.

In preferred processes purified diluent comprises 30 -100 % of the total diluent recycled. Preferably the first (LMW polymer) reactor is fed with purified diluent. Preferably the second (HMW2 polymer) reactor is fed with non-purified and/or purified diluent. Preferably the third (HMW1 polymer) reactor is fed with non-purified and/or purified diluent. Additionally, an amount (e.g. 0.1 to 4 % v) of fresh diluent is preferably added to the reactor system, e.g. to replace diluent losses.

In a further preferred process the first (LMW polymer), second (HMW2 polymer) and third (HMW1 polymer) reactors are fed fresh comonomer and/or recycled comonomer. Preferably comonomer is not fed to the first (LMW polymer) reactor. Preferably more than 40 % by weight, still more preferably more than 60 % by weight (e.g. 40 to 80 % by weight) of the total feed of comonomer to the third (HMW1) reactor comes with the diluent and polymer flow from the second (HMW2) reactor

Advantages of the process shown in Figure 1 over a conventional process wherein polymers of increasing molecular weight and comonomer content are made in sequence include:

- Total mass flow of comonomer from the separation is reduced, since the comonomer concentration is typically lower in HMW1 polymer reactor than in HMW2 polymer reactor. This makes separation of comonomer from diluent and from polyethylene wax easier, as well as makes handling of the comonomer easier and cheaper by the lower volumes. Also, it is advantageous in those cases where some of the comonomer undergoes undesired chemical reactions in the recycle system. During product transition to a grade needing less comonomer, the volume needed for storage of the superfluous comonomer will be less.

- The HMW2 polymer reactor volume may be much lower, both since the catalyst concentration is much higher there, and since the pressure typically would be higher than early in the process. Also, in the HMW2 polymer reactor it is easier to incorporate the typically quite high comonomer content since the catalyst's residence time in the reactor system at HMW2 polymer step is lower than in the conventional process, and Ziegler catalysts' ability to incorporate comonomer decreases with increasing residence time.

- A high fraction of the recycled diluent may be utilised as non-purified diluent.

- Lower catalyst consumption at equal total residence time (see examples) in all three reactors.

- It is possible to recycle the blend of comonomer and diluent to the second reactor.

- It is possible to recycle diluent from the third reactor back to the first reactor without removing comonomer when the LMW polymer is a copolymer or if a minor amount of comonomer can be tolerated in the LMW polymer.

It should also be noted here that although the polymerisation has been described in relation to a three step and three reactor sequence, it may of course be incorporated into a longer (e.g. four or more step) sequence comprising further reactors. For instance regardless of the process used, there may optionally be a reactor subsequent to the third reactor. This preferably produces a copolymer. In this reactor would be produced 1 - 30 % wt of the total polymer, more preferably 2 - 20 % wt (e.g. 2-9.5 % wt), still more preferably 3-15 % wt, e.g. 4 to 9.5 % wt. Similarly there may be a reactor (e.g. a prepolymerisation reactor) prior to the first reactor referred to above.

Downstream processing

When the final polyethylene is obtained from a slurry reactor, the polymer is removed therefrom and the diluent preferably separated from it by flashing or filtration. The major part of the diluent and unconverted comonomer is preferably recycled back to the polymerisation reactor(s). Preferably the polymer is then dried (e.g. to remove residues of liquids and gases from the reactor). Optionally the polymer is subjected to a deashing step, i.e. to washing with an alcohol, optionally mixed with a hydrocarbon liquid, or water. Preferably there is no deashing step.

In order that the polyethylene can be handled without difficulty, both within and downstream of the polymerisation process, the polyethylene from the reactors is preferably in a free-flowing state, preferably by having relatively large particles of high bulk density, e.g. less than 20 % wt of the polymer powder being smaller than 100 $\mu$m size, and the loose bulk density being higher than 300 kg/m$^3$.

Preferably the processes from the polymerisation until the pelletisation extruder outlet are carried out under an inert (e.g. N$_2$) gas atmosphere.

Antioxidants are preferably added (process stabilisers and long term antioxidants) to the polyethylene. As antioxidant, all types of compounds known for this purpose may be used, such as sterically hindered or semi-hindered phenols, aromatic amines, aliphatic sterically hindered amines, organic phosphates and sulphur-containing compounds (e.g. thioethers). Other additives (antiblock, colour masterbatches, antistatics, slip agents, fillers, UV absorbers, lubricants, acid neutralisers and fluoroelastomer and other polymer processing agents) may optionally be added to the polymer.

If the polyethylene is to be used for the manufacture of pipe, a pigment (e.g. carbon black) is preferably added before extrusion. Pigments are preferably added in the form of a master batch.

The polyethylene is preferably extruded and granulated into pellets. Preferred pellets have a loose bulk density of greater than 400 kg/m$^3$ and less than 10 % wt of pellets smaller than 2 mm in size.

Further additives (e.g. polymer processing agents or antiblock) may be added after pelletisation of the polyethylene. In this case the additives are preferably used as masterbatches and pellets mixed therewith before being, e.g. moulded into articles.

Polyethylene composition

The polyethylene composition of the present invention preferably has at least one of the following properties.

The polyethylene preferably has a FNCT time to failure of greater than 10 hours, more preferably greater than 15 hours and still more preferably greater than 20 hours, e.g. under the conditions specified in the examples below. The maximum FNCT time to failure may be, e.g. 50 hours.

The polyethylene preferably has a Charpy Impact at +23 °Cof greater than 5 kJ/m$^2$, more preferably greater than 10 kJ/m$^2$ and still more preferably greater than 12 hours, e.g. under the conditions specified in the examples below. The maximum Charpy Impact may be, e.g. 50 kJ/m$^2$.

The polyethylene preferably has a Shore hardness of at least 30, more preferably at least 40 and still more preferably at least 50 and more preferably at least 60 e.g. under the conditions specified in the examples below. The maximum Shore hardness may be 90.

The polyethylene preferably has an Abrasion of less than 40%, more preferably less than 30% and still more preferably less than 25%, e.g. under the conditions specified in the examples below. The mimimum abrasion may be 5 %.

An advantage of the polyethylene composition of the present invention is the combination of properties that may be achieved. Preferred polyethylene compositions of the invention possess at least two, more preferably at least three and still more preferably all four of the following properties, e.g. as determined under the conditions specified in the examples below:

| | |
|---|---|
| FNCT time to failure: | >10 hours |
| Charpy Impact: | >5 kJ/m$^2$ |
| Shore hardness: | >30 |
| Abrasion: | <40% |

Still more preferably the polyethylene composition of the invention possesses at least two, more preferably at least three and still more preferably all four of the following properties, e.g. as determined under the conditions specified in the examples below:

| | |
|---|---|
| FNCT time to failure: | >20 hours |
| Charpy Impact: | >12 kJ/m$^2$ |
| Shore hardness: | >50 |
| Abrasion: | <25% |

Applications

The polyethylene of the present invention may be used in any moulding application such as blow moulding or in extrusion such as pipe extrusion and film extrusion. Preferably, however, the polyethylene is used in extrusion, especially in pipe extrusion.

The polyethylene of the present invention is preferably used in pipe applications. Preferably it is used in HDPE pipes, e.g. according to PE80 or PE100 standards. The pipes may be used e.g. for water and gas distribution, sewer, wastewater, agricultural uses, slurries, chemicals etc.

The invention will now be described with reference to the following non-limiting examples and Figures wherein:

Figure 1 is a schematic of a preferred process of the present invention;
Figure 2 is a graph showing FNCT versus the fraction of second higher molecular weight ethylene copolymer;
Figure 3 is a graph showing Charpy impact +23 °C versus the fraction of second higher molecular weight ethylene copolymer;
Figure 4 is a graph showing Charpy impact -20 °C versus the fraction of second higher molecular weight ethylene copolymer;
Figure 5 is a graph showing scratchability versus the fraction of second higher molecular weight ethylene copolymer;
Figure 6 is a graph showing abrasion versus the fraction of second higher molecular weight ethylene copolymer;
Figure 7 is a graph showing Shore hardness versus the fraction of second higher molecular weight ethylene copolymer

EXAMPLES

Determination methods for polymers

Unless otherwise stated, the following parameters were measured on polymer samples as indicated in the Tables below.

$MFR_2$, $MFR_5$ and $MFR_{21}$ were measured according to ISO 1133 at loads of 2.16; 5.0, and 21.6 kg respectively. The measurements were done at 190 °C.

Molecular weights and molecular weight distribution, Mn, Mw and MWD were measured by Gel Permeation Chromatography (GPC) according to the following method: The weight average molecular weight Mw and the molecular weight distribution (MWD = Mw/Mn wherein Mn is the number average molecular weight and Mw is the weight average molecular weight) is measured by a method based on ISO 16014-4:2003. A Waters Alliance GPCV2000 instrument, equipped with refractive index detector and online viscosimeter was used with 1 PLgel GUARD + 3 PLgel MIXED-B and 1,2,4-trichlorobenzene (TCB, stabilised with 250 mg/L 2,6-Di tert butyl-4-methyl-phenol) as solvent at 140 °C and at a constant flow rate of 1 mL/min. 200 $\mu$l of sample solution were injected per analysis. The column set was calibrated using universal calibration (according to ISO 16014-2:2003) with 15 narrow molecular weight distribution polystyrene (PS) standards in the range of 1.0 kg/mol to 12 000 kg/mol. These standards were from Polymer Labs and had Mw/Mn from 1.02 to 1.10. Mark Houwink constants were used for polystyrene and polyethylene (K: 0,19 x 10$^{-5}$ dL/g and a: 0.655 for PS and K: 3.9 x 10$^{-4}$ dL/g and a: 0.725 for PE). All samples were prepared by dissolving 0.5-3.5 mg of polymer in 4 mL (at 140 °C) of stabilised TCB (same as mobile phase) and keeping for 3 hours at 140 °C and for another 1 hour at 160 °C with occasional shaking prior to sampling into the GPC instrument.

Melting temperature was measured according to ISO 11357-1 on Perkin Elmer DSC-7 differential scanning calorimetry. Heating curves were taken from -10 °C to 200 °C at 10 °C/min. Hold for 10 min at 200 °C. Cooling curves were taken from 200 °C to -10 °C at 10 °C per min. Melting temperature was taken as the peak of the endotherm of the second heating. The degree of crystallinity was calculated by dividing the observed melting peak with the heat of melting of a perfectly crystalline polyethylene, generally taken to be 290 J/g.

Comonomer content (% wt) was determined based on Fourier transform infrared spectroscopy (FTIR) determination calibrated with C13-NMR.

Density of materials is measured according to ISO 1183:1987 (E), method D, with isopropanol-water as gradient liquid. The cooling rate of the plaques when crystallising the samples was 15 C/min. Conditioning time was 16 hours.

Rheology of the polymers was determined by frequency sweep at 190 ºC under nitrogen atmosphere according to ISO 6721-10, using Rheometrics RDA II Dynamic Rheometer with parallel plate geometry, 25 mm diameter plate and 1.2 mm gap. The measurements gave storage modulus (G'), loss modulus (G") and complex modulus (G*) together with the complex viscosity ($\eta^*$), all as a function of frequency ($\omega$). These parameters are related as follows: For any frequency $\omega$: The complex modulus: $G^* = (G'^2 + G''^2)^{1/2}$. The complex viscosity: $\eta^* = G^*/\omega$. The denomination used for modulus is Pa (or kPa) and for viscosity is Pa s and frequency (1/s). $\eta^*_{0,05}$ is the complex viscosity at a frequency of 0.05 s$^{-1}$ and $\eta^*_{300}$ is the complex viscosity at 300 s$^{-1}$. According to the empirical Cox-Merz rule, for a given polymer and temperature, the complex viscosity as a function of frequency measured by this dynamic method is the same as the viscosity as a function of shear rate for steady state flow (e.g. a capillary).

The activity coefficient for the bench scale polymerisation runs is calculated by the following equation:

$$Activity\_coefficient(kg/(g,bar,h)) = \frac{(Yield\_of\_polymer\_(kg))}{(Catalyst\_amount\_(g)) \cdot (Partial\_pressure\_of\_ethylene\_(bar)) \cdot (Polymerisation\_time - (h))}$$

Polydispersity Index, PI, is the crossoverpoint in a RDA frequency sweep where G' equals G", and given by: $PI = 10^5$ Pa/G'.

Intrinsic viscosity: Viscosity numbers were measured in decalin at 135°C according to EN-ISO 1628-3:20 and from this intrinsic viscosity was calculated as follows. From measurements after each of the polymerisation steps, Mv (viscosity average molecular weight) was calculated by the Marks-Houwink equation using preexponential factor of 0,0475 ml/g and exponent 0.725. This enables calculation of Mv of polymer made in each step, through the following additional equations:

$$Mw = \sum_{i=1}^{n} (W_i \cdot Mw_i)$$

$$\frac{1}{Mn} = \sum_{i=1}^{n} \left( \frac{W_i}{Mn_i} \right)$$

$$Mv = \frac{Mw}{\left( Mw / Mn \right)^{0.22}}$$

Here Mw, Mn and Mv are respectively weight average, number average and viscosity average molecular weights, W is weight fraction of polymer and i is polymer component, n is the total number of components after the step. The two first equations are exact, the third is empirical. In addition, Mw/Mn of each polymer component was taken as 7.

Determination methods for polymer composition

Unless otherwise stated, the following parameters were measured on 4mm plates that were compression molded on a Collin 300 P compression moulder with reference to ISO 293-186, ISO1872-2-1197 and ISO1873-2-1997;

FNCT time to failure is measured according to ISO16770 with 8.5MPa load at a temperature of 80°C in 2 wt% Arkopal N110 in deionised water on 10mm compression molded dogbones, milled from compression molded plate, notch depth 1,6mm all round.

Charpy Impact is measured according to ISO179-1/1eA using V-notched samples on compression moulded specimens at +23°C and at -20°C.

Shore Hardness: Shore D is measured on a digital shoremeter, Bareiss type HHP-2001 according to any cracks initiated. Sample conditioning is done according to ISO291:1997.

Abrasion resistance is measured according to ISO 4649, type B test (non-rotating sample) with force 10 N at 23 °C.

Scratchability: A compression moulded plate of the polymer composition was scratched at +23°C with an Erichsen scratch resistance tester with a tip diameter of 1 mm with 10 N normal force. The scratched plate was cut perpendicular to scratch, the cross section micrographed and from this the depth of the scratch was measured.

For small scale experiments, for which no pipes can be made and tested, it is conventional to use FNCT measurement on compound as a measure for SCG and to use Charpy Impact on compound as a measure of RCP. Similarly Shore hardness D measures the hardness of the sample and is a measure of the probability that scratching can occur. Abrasion resistance according to ISO4649 measures volume loss of the test material after being subjected to abrasion by an abrasive sheet which will cause a reference compound to lose a defined mass under the same specified conditions of test. In addition to providing a measure of the degree of abrasion by, e.g. transport of abrasive slurries along a polymer surface, like the hardness test, it also provides a measure of the likelihood that a scratch can occur.

Experimental

Examples 1-4

A conventional Ziegler-Natta catalyst with Ti as the transition metal was used. The catalyst is described in US4792588. The titanium content was 3.4 % wt.

Polymerisation was carried out in a 8 litre flask fitted with a stirrer and a temperature control system. The catalyst was added as a mud. TEA, triethyl aluminium was used as activator. The same comonomer feeding system was used for all runs. The procedure comprised the following steps:

Polymerization of lower molecular weight ethylene polymer:
The reactor was purged with nitrogen and heated to 110°C. Hydrogen was then loaded at 20°C to give a pressure of 3.05 bar. 3000 ml liquid hexane was then added to the reactor and stirring started; 300 rpm. The reactor temperature was 70°C. Cocatalyst and TEA were then pre-contacted in mud for 5 min and loaded with 800 ml of hexane. Ethylene was then fed to get a total pressure of 12.3 bar. Ethylene was then fed continuously via a mass flow meter. When sufficient amount of powder is made, the polymerization is stopped and the hexane is evaporated.

Polymerization of first higher molecular weight ethylene:
Hydrogen is loaded at 20°C to 0.16 bar. Stirring is then started at 300rpm. The reactor is then heated to >70°C. When the temperature reaches 72°, 35ml 1-butene is added and ethylene is fed to get a total pressure of 5.7 bar g. Ethylene and 1-butene are then fed continuously. When sufficient amount of powder is made, the polymerization is stopped and the hexane is evaporated.

Polymerization of second higher molecular weight ethylene polymer:
The reactor is heated to >70°C, 3000 ml hexane is loaded and stirring is started at 300 rpm. When the temperature reaches 72°C, ethylene and 180 ml1-butene is fed to get a total pressure of 5.3 bar. Ethylene and 1-butene were then fed continuously. When sufficient amount of powder is made, the polymerization is stopped and the hexane is evaporated.

In examples 1, 3 and 4 the polymerisations were carried out in the order (i) lower molecular weight ethylene polymer, (ii) first higher molecular weight ethylene polymer (HMW1) and (iii) second higher molecular weight ethylene polymer (HMW2). Thus when HMW1 is polymerised, the LMW polymer is present and when HMW2 is polymerised both of the LMW and HMW1 polymers are present. In example 2 the polymerisations were carried out in the order (i) lower molecular weight ethylene polymer, (ii) second higher molecular weight ethylene polymer (HMW2) and (iii) first higher molecular weight ethylene polymer (HMW1). Thus when HMW2 is polymerised, the LMW polymer is present and when HMW1 is polymerised both of the LMW and HMW2 polymers are present.

Four comparative polymerisations were also carried out. The first comparative polymerisation (C1) was carried out in the same manner as above except that no 1-butene was added on the polymerization of the second higher molecular weight ethylene polymer. The comparative polymerisations (C2 and C4) were carried out in the same manner as above except that the polymerization was stopped after the polymerization of the first higher molecular weight ethylene. The comparative polymerisation (C3) was done with a higher amount (10 % wt) of the second higher molecular weight (HMW2) polymer.

Further details of the polymerisation procedure and polymerisation results is given in Table 1A and details of the resulting polyethylene polymers are summarised in Table 1 B below wherein RI refers to the polymerisation in and the product of the first reactor, RII refers to the polymerisation in the second reactor and the product of the first and second reactor together and RIII refers to the polymerisation in the third reactor and the product of the first, second and third reactor together, which is the final polyethylene product.

| TABLE 1A | | Ex. 1-RI | Ex. 1-RII | Ex. 1-RIII | Ex. 2-RI | Ex. 2-RII | Ex. 2-RIII | Ex. 3-RI | Ex. 3-RII | Ex. 3-RIII | Ex. 4-RI | Ex. 4-RII | Ex. 4-RIII |
|---|---|---|---|---|---|---|---|---|---|---|---|---|---|
| Catalyst amount | g | 0.156 | 0.152 | 0.149 | 0,13 | 0,124 | 0,121 | 0,172 | 0,155 | 0,154 | 0,14 | 0,14 | 0,14 |
| Al/Ti | mol/mol | 20 | 20 | 20 | 20 | 20 | 20 | 20 | 20 | 20 | | 20 | 20 |
| TEA amount (1 mol/l solution) | ml | 2.21 | 2.16 | 2.12 | 5 | 5 | 5 | 5 | 5 | 5 | 5 | 5 | 5 |
| Polymerisation type | | Homo | Copo | Copo | Homo | Copo | Copo | Homo | Copo | Copo | Homo | Copo | Copo |
| Temperature | °C | 72 | 72 | 72 | 82 | 72 | 72 | 82 | 72 | 72 | 82 | 72 | 72 |
| Total pressure | barg | 12.30 | 5.70 | 5.30 | 12,3 | 5,4 | 5,5 | 12,3 | 5,6 | 5,2 | 12 | 5,5 | 5,5 |
| Diluent type | | hexane | hexane | hexane | hexane | hexane | hexane | hexane | hexane | hexane | hexane | hexane | hexane |
| Partial pressure of diluent | bar | 2.5 | 2.5 | 2.5 | 2,5 | 2,5 | 2,5 | 2,5 | 2,5 | 2,5 | 2,5 | 2,5 | 2,5 |
| Amount of diluent | ml | 3800 | 3800 | 3800 | 3800 | 3800 | 3800 | 3800 | 3800 | 3800 | 3800 | 3800 | 3800 |
| Stirring speed | rpm | 270 | 270 | 270 | 270 | 270 | 270 | 270 | 270 | 270 | 270 | 270 | 270 |
| Ethylene partial pressure | bar | 3 | 3 | 3 | 3 | 3 | 3 | 3 | 3 | 3 | 3 | 3 | 3 |
| H2 partial pressure after charging to empty reactor at 20 °C at start | bar | 3.05 | 0.12 | 0.00 | 3,06 | 0 | 0,09 | 3,06 | 0,1 | 0 | 3,06 | 0,1 | 0 |
| Comonomer type | | - | 1-butene | 1-butene | - | 1-butene | 1-butene | - | 1-butene | 1-butene | - | 1-butene | 1-butene |
| Comonomer batch (in start) | ml | 0 | 20 | 180 | 0 | 130 | 15 | 0 | 10 | 140 | 0 | 10 | 140 |
| Comonomer total | ml | 0 | 58 | 240 | 0 | 160 | 38 | 0 | 38 | 170 | 0 | 38 | 170 |
| Comonomer in diluent | wt% | 0 | 0.48 | 4.28 | 0 | 3,45 | 0,63 | 0 | 0,57 | 3,69 | 0 | 0,57 | 3,69 |
| Polymerisation time | min | 90 | 69 | 9 | 90 | 8 | 57 | 90 | 62 | 14 | 90 | 62 | 14 |
| Yield | g | 885 | 790 | 90 | 760 | 75 | 690 | 1120 | 830 | 145 | 1120 | 950 | 50 |
| Activity | kg PE/g cat, h | 3.8 | 4.5 | 4.0 | 3,9 | 4,5 | 6 | 4,3 | 5,2 | 4 | 5,3 | 6,6 | 1,5 |
| Activity (per Ti) | kg PE/g Ti, h | 111 | 133 | 118 | 115 | 133 | 177 | 128 | 152 | 119 | 157 | 193 | 45 |
| Effective average activity all stages # | kg PE/g Ti, h | | | 120.4 | | | 138.7 | | | 136.2 | | | 161,0 |
| Effective average activity all steps/ Activity of step RI □ | | | | 1.08 | | | 1.21 | | | 1.06 | | | 1,03 |
| Productivity | kg PE/g catalyst | 5.7 | 5.2 | 0.6 | 5,8 | 0,6 | 5,7 | 6,5 | 5,4 | 0,9 | 8 | 6,8 | 0,4 |
| Productivity (per Ti) | kg PE/g Ti | 167 | 153 | 18 | 172 | 18 | 168 | 192 | 157 | 28 | 235 | 200 | 11 |
| Polymer component made in step | % wt | 50 | 45 | 5 | 50 | 5 | 45 | 50 | 42,5 | 7,5 | 50 | 47,5 | 2,5 |
| Slurry concentration (at the end) | g powder/l hexane | 233 | 208 | 24 | 200 | 20 | 182 | 295 | 218 | 38 | 295 | 250 | 13 |

# Effective average activity of all stages is average of catalyst activity of the steps weighted by the time in the steps

□ Since all RI polymerisation steps were nominally run at identical conditions, this ratio gives the effective average catalyst activity after normalisation for any deviation in catalytic activity due to any error in catalyst amount, catalyst poison, cocatalyst quality/amount etc.

**Table 1A (continued)**

| | | C1-RI | C1-RII | C1-RIII | C2-RI | C2-RII | C3-RI | C3-RII | C3-RIII | C4-RI | C4-RII |
|---|---|---|---|---|---|---|---|---|---|---|---|
| Catalyst amount | g | 0.156 | 0.152 | 0.149 | 0.144 | 0.140 | 0.152 | 0.145 | 0.142 | 0,14 | 0,13 |
| Al/Ti | mol/mol | 20 | 20 | 20 | 20 | 20 | 20 | 20 | 20 | 20 | 20 |
| TEA amount (1 mol/l solution) | ml | 2.21 | 2.16 | 2.12 | 2.04 | 1.99 | 5 | 5 | 5 | 5 | 5 |
| Polymerisation type | | Homo | Copo | Homo | Homo | Copo | Copo | Copo | Copo | Homo | Copo |
| Temperature | °C | 72 | 72 | 72 | 82 | 72 | 82 | 72 | 72 | 82 | 72 |
| Total pressure | barg | 12.30 | 5.70 | 5.30 | 12.30 | 5.70 | 12,3 | 5,6 | 5,2 | 12,1 | 5,5 |
| Diluent type | | hexane | hexane | hexane | hexane | hexane | hexane | hexane | hexane | hexane | hexane |
| Partial pressure of diluent | bar | 2.5 | 2.5 | 2.5 | 2.8 | 2.5 | 2.5 | 2.5 | 2.5 | 2.8 | 2.5 |
| Amount of diluent | ml | 3800 | 3800 | 3800 | 3800 | 3800 | 3800 | 3800 | 3800 | 3800 | 3800 |
| Stirring speed | rpm | 270 | 270 | 270 | 270 | 270 | 270 | 270 | 270 | 270 | 270 |
| Ethylene partial pressure | bar | 3 | 3 | 3 | 3 | 3 | 3 | 3 | 3 | 3 | 3 |
| H2 partial pressure after charging to empty reactor at 20°C at start | bar | 3.05 | 0.16 | 0.00 | 3.15 | 0.13 | 3,06 | 0,1 | 0 | 3,05 | 0,07 |
| Comonomer type | | - | 1-butene | - | - | 1-butene | 1-butene | 1-butene | 1-butene | - | 1-butene |
| Comonomer batch (in start) | ml | 0 | 35 | 0 | 0 | 35 | 0 | 10 | 140 | 0 | 35 |
| Comonomer total | ml | 0 | 102 | 0 | 0 | 106 | 0 | 38 | 170 | 0 | 106 |
| Comonomer in diluent | wt% | 0 | 0.83 | 0 | 0 | 0.84 | 0 | 0,57 | 3,69 | 0 | 1,68 |
| Polymerisation time | min | 90 | 69 | 9 | 90 | 73 | 90 | 62 | 14 | 90 | 73 |
| Yield | g | 885 | 790 | 90 | 935 | 895 | 960 | 730 | 180 | 750 | 1080 |
| Activity | kg PE/g cat, h | 3.8 | 4.5 | 4.0 | 4.3 | 5.3 | 4.2 | 4.9 | 5.4 | 3.7 | 6,6 |
| Activity (per Ti) | kg PE/g Ti, h | 111 | 133 | 118 | 127 | 155 | 124 | 143 | 160 | 108 | 195 |
| Effective average activity all stages # | kg PE/g Ti, h | | | 120.4 | | 139.5 | | | 134,1 | | 147,0 |
| Effective average activity all steps/ Activity of step RI ° | | | | 1.08 | - | 1.10 | | | 1,08 | | 0,94 |
| Productivity | kg PE/g catalyst | 5.7 | 5.2 | 0.6 | 6.5 | 6.4 | 6.3 | 5 | 1,3 | 5,5 | 8,1 |
| Productivity (per Ti) | kg PE/g Ti | 167 | 153 | 18 | 191 | 188 | 186 | 148 | 37 | 162 | 237 |
| Polymer component made in step | % wt | 50 | 45 | 5 | 50 | 50 | 50 | 40 | 10 | 40 | 60 |
| Slurry concentration (at the end) | g powder/l hexane | 233 | 208 | 24 | 246 | 236 | 253 | 192 | 47 | 197 | 284 |

\# Effective average activity of all stages is average of catalyst activity of the steps weighted by the time in the steps

° Since all Ri polymerisation steps were nominally run at identical conditions, this ratio gives the effective average catalyst activity after normalisation for any deviation in catalytic activity due to any error in catalyst amount, catalyst poison, cocatalyst quality/amount etc.

**Table 1B**

**POLYMER ANALYSES**

| | | Ex. 1-RI | Ex. 1-RII | Ex. 1-RIII | Ex. 2-RI | Ex. 2-RII | Ex. 2-RIII | Ex. 3-RI | Ex. 3-RII | Ex. 3-RIII | Ex. 4-RI | Ex. 4-RII | Ex. 4-RIII |
|---|---|---|---|---|---|---|---|---|---|---|---|---|---|
| MFR2 | g/10min | 101 | | | | | | | | | | | |
| Density | kg/dm3 | | | 948 | 970,7 | 962,8 | 948,3 | 969 | 952,9 | 949,9 | | | 948,5 |
| MFR5 | g/10 min | | 0.87 | 0.48 | | | | | 0,48 | | | | 0,41 |
| $\eta^*_{0.05}$ (Rheology) | Pa s | | | 96,179 | | | | | | | | | |
| $\eta^*_{300}$ (Rheology) | Pa s | | | 817 | | | | | | | | | |
| PI | | | | 5.2 | | | | | | | | | |
| Intrinsic viscosity in step | ml/g | | | | | | | 75 | 799 | 1082 | | | |
| Viscosity average MW (Mv) in step | kg/mol | | | | | | | 25,8 | 673,7 | 1 024,0 | | | |
| MFR21 of polymer made in step (estimate) | g/10 min | | 0.83 | 0.03 | | | | | | | | | |

**Table 1B continued**

**POLYMER ANALYSES**

| | | C1- RI | C1-RII | C1-RIII | C2-RI | C2-RII | C3-RI | C3-RII | C3-RIII | C4-RI | C4-RII |
|---|---|---|---|---|---|---|---|---|---|---|---|
| MFR2 | g/10min | 102 | | | 108 | | | | | | |
| Density | kg/dm3 | | | 948 | | 948 | 969,4 | 953,8 | 948,7 | | 943 |
| MFR5 | g/10 min | | 1.36 | 0.49 | | 0.47 | | | 0,45 | | 0,34 |
| eta0,05 (Rheology) | | | | 126,253 | | 119,792 | | | | | |
| eta300 (Rheology) | | | | 761 | | 888 | 77 | 660 | 676 | | |
| PI | | | | No cross | | 4.9 | 26,8 | 517,9 | 534,8 | | |
| MFR21 of polymer made in step (estimate) | g/10 min | | 1.4 | 0,01 | | 0.50 | | | | | |

The activity results of the polymerisations were surprising in that the ratio of Effective average activity all steps over Activity of step RI was more than 10 % higher on the three-step run with HMW2 in the second step compared to the other three- and two-step polymerisations. This ratio is a relevant measure of the inverse of catalyst consumption in a production plant at given production rate with a given catalyst at a given total residence time. This means that producing HMW2 polymer in the second polymerisation step and not in the third is expected to significantly lower consumption of catalyst in continuous, commercial production. Similarly, producing HMW2 polymer in the second polymerisation step and not in the third is expected to significantly give lower consumption of catalyst than producing the polymer in only two steps. The cost of the catalyst consumption is a considerable production cost in commercial production, so this reduction represents a considerable saving to increase profits. Also, producing HMW2 polymer in the third reactor is quite favourable compared to producing the polymer in only two steps.

The polymers were compounded with 1550 ppm of Irganox B215 (antioxidant) on a Prism16 extruder with UD=25. The extruder was run with an output rate of 1kg/h, 500rpm, no vacuum and with nitrogen flushing. The extruder temperature profile was 180-200x4-180(die). The resulting pellets were then pressed into 4mm plates following ISO293-1986, 1872-2 and 1873-2. Proper test specimens were then made from these plates.

The results are shown in Table 2 below.

Table 2

| Polyethylene | | Example 1 | Example 2 | Example 3 | Example 4 | C1 | C2 | C3 | C4 |
|---|---|---|---|---|---|---|---|---|---|
| Prepared by polymerisation stages (in order as shown) | | RI RII RIII | RI RIII RII | RI RII RIII | RI RII RIII | RI RII RIII | RI RII | RI RII RIII | RI RII |
| Split; RI/RII/RIII | wt% | 50/45/5 | 5015/45 | 50/42,5/7,5 | 50/47,5/2,5 | 50/45/5 | 50/50 | 50/40/10 | 40/60 |
| Comonomer /(C4) in RIII | | Yes | Yes | Yes | yes | No | - | Yes | Yes |
| MFR5 | g/10 min | 0,48 | 0,46 | 0,48 | 0,41 | 0,49 | 0,47 | 0,45 | 0,34 |
| | | | | | | | | | |
| Density | kg/m$^3$ | 948 | 948,3 | 949,9 | 948,5 | 948 | 948 | 948,7 | 943 |
| FNCT time to failure* | h | 31 [11] | 30 [2] | 26 [4] | 45 [3] | 13 [7] | 15 [3] | 23 [4] | - |
| Charpy impact 23 C | kJ/m$^2$ | 19 [0,5] | 19,6 | 16,7 [0.4] | 29 [0.5] | 18 [0.3] | 19 [0,4] | 15,2 [0.3] | 22,9 [0.4] |
| Shore hardness | - | 67 [0,3] | 68,6 [0.3] | 68,5 [0.7] | 69,5 [0.7] | 67 [0,5] | 68 [0,4] | | |
| Abrasion (ISO 4649) | % | 16,6 | | | | 19,4 | 18,7 | 19,4 | |
| Scratchability | μm | | 12 | 13 | 10 | | | 13 | |
| Charpy impact -20 C | kJ/m$^2$ | | | 15 | 20 | | | 13 | |
| *All samples showed brittle failure in FNCT | | | | | | | | | |

The final polymers of example 1-4 and C1-C4 have very similar or identical density values and very similar $MFR_5$ values, which means that their stiffnesses are also very similar as are their practical extrusion processability. As a result, they can be compared fairly.

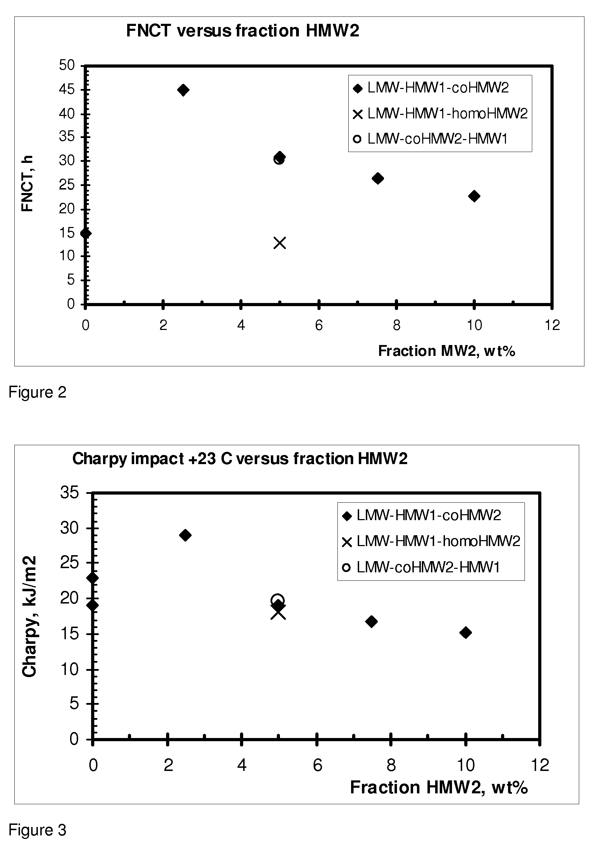

Astonishingly, the polyethylene compositions of the invention have far higher FNCT result than all of the comparative polymer compositions. Surprisingly, FNCT is higher for the polyethylene compositions of the invention which comprises a lower content of second higher molecular weight ethylene copolymer than those with a higher content of the same ethylene copolymer. This is also shown in Figure 2.

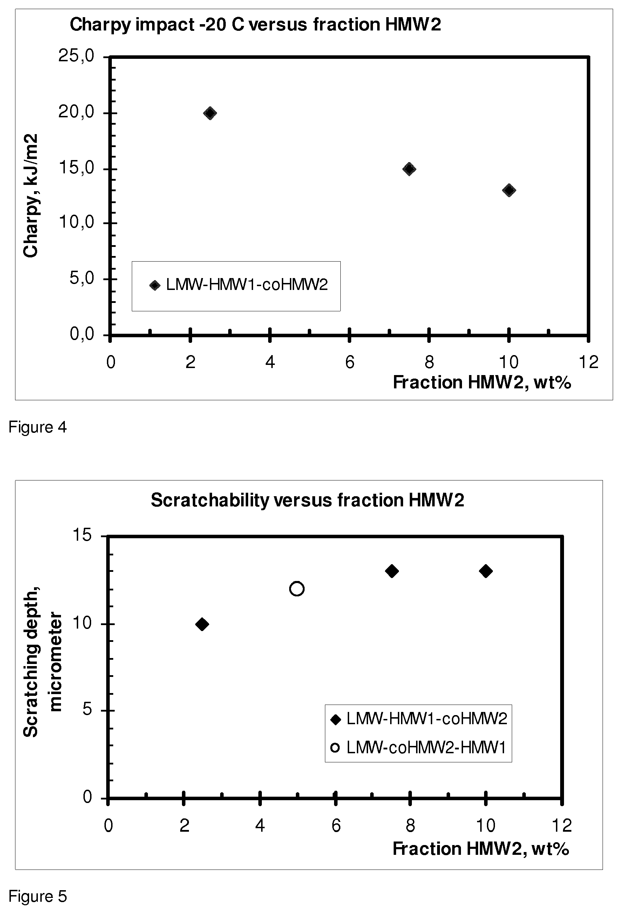

Even more surprisingly, the Charpy impact indicating RCP resistance, was not reduced, which as mentioned, usually occurs when a modification to a polymer is made that increases FNCT. This is shown in Figures 3 and 4. Both room temperature Charpy impact (figure 3) as well as low temperature Charpy impact (figure 4) was better for the polyethylene compositions comprising a lower content of second higher moleculer weight ethylene copolymer than for a higher content of the same copolymer.

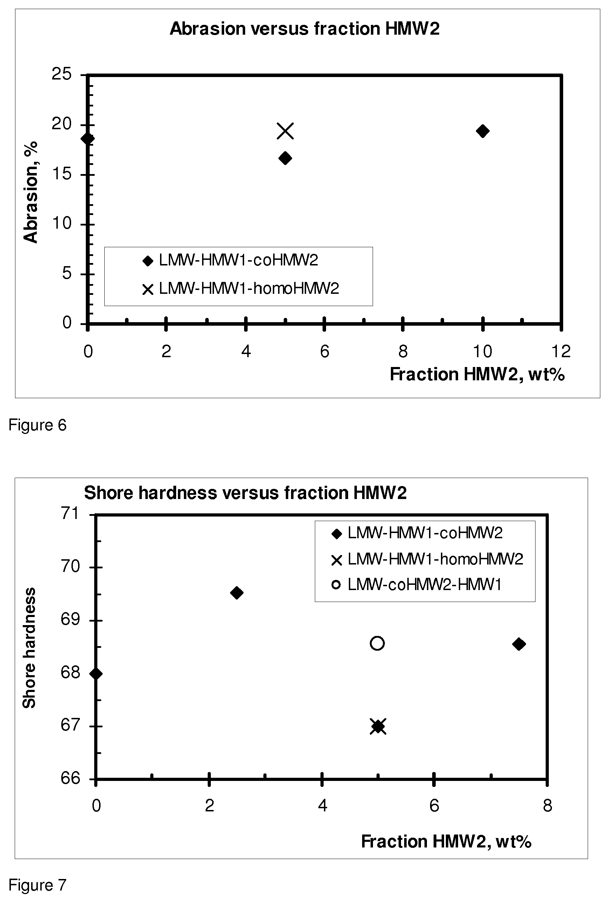

Scratchability was additionally found to be better (lower values) for the polyethylene compositions comprising a lower content of second higher moleculer weight ethylene copolymer than for a higher content of the same copolymer. This is shown in Figure 5. Also abrasion resistance was found better (lower values) for the polyethylene compositions comprising a lower content of second higher moleculer weight ethylene copolymer than for a higher content of the same copolymer. This is shown in Figure 6. Even Shore hardness was maintained in spite of the fact that the third component/fraction is a relative soft component due to its high comonomer content. This is shown in Figure 7.

It is impressive that such a significant improvement in mechanical properties, specifically SCG and RCP, could be obtained by the incorporation of such a small amount of a second higher molecular weight copolymer. Even more desirably, the results (Shore hardness, scratching resistance and abrasion resistance) show that the polyethylene of the invention is more resistant to becoming scratched, nicked or notched in the first place by the handling of the pipes in the field, which means that the number and size of defects that can propagate into cracks is also reduced. This combination of properties is highly desirable for the manufacture of pipes, particularly high pressure pipes.

It is hypothesised that the third polymer, having a relatively high molecular weight and a relatively high comonomer content increases the level of tie-chains and entanglements in the polyethylene composition. This increased level of tie-chains and entanglements will dissipate the energy associated with the stress field in an initiated crack and reduce the likeliness of a crack to propagate. Moreover the polymer of the present invention is also convenient to prepare. The relatively small amount of second high molecular weight copolymer, may be made in a relatively small reactor, with a short residence time or alternatively in a medium size reactor where very conservative reactor conditions are employed.

## Claims

1. A polyethylene having a multimodal molecular weight distribution, comprising:

    (i) 20-70% wt of a lower molecular weight ethylene homopolymer;
    (ii) 20-70% wt of a first higher molecular weight ethylene copolymer; and
    (iii) 0.5-9.5% wt of a second higher molecular weight ethylene copolymer,

    wherein said second higher molecular weight ethylene copolymer has a greater weight average molecular weight than said first higher molecular weight ethylene copolymer.

2. A polyethylene as claimed in claim 1, wherein said second higher molecular weight copolymer is present in an amount of 1.5-6 % wt.

3. A polyethylene as claimed in claim 1 or claim 2, wherein said second higher molecular weight ethylene copolymer has a higher % wt comonomer content than said first higher molecular weight copolymer.

4. A polyethylene as claimed in any preceding claim, wherein said second higher molecular weight ethylene copolymer has a comonomer content of 1 to 20 % wt.

5. A polyethylene as claimed in any preceding claim, wherein said first higher molecular weight ethylene copolymer has a comonomer content of 0.3 to 2.5 %wt.

6. A polyethylene as claimed in any preceding claim, wherein said first higher molecular weight ethylene copolymer and/or said second higher molecular weight ethylene copolymer is an ethylene 1-butene copolymer.

7. A polyethylene as claimed in any preceding claim, wherein said second higher molecular weight ethylene copolymer has a weight average molecular weight of 200,000 to 2,000,000 g/mol.

8. A polyethylene as claimed in any preceding claim, wherein said first higher molecular weight ethylene copolymer has a weight average molecular weight of 200,000 to 700,000 g/mol.

9. A polyethylene as claimed in any preceding claim, having a density of 945-962 kg/m$^3$ as measured by ISO 1183:1987 (E), method D, with isopropanol-water as gradient liquid and/or a MFR$_5$ of 0.15-0.6 g/10min as measured according to ISO 1133 at a load of 5.0 kg

10. A process for the preparation of a polyethylene as claimed in any one of claims 1 to 9 comprising polymerising ethylene and, as required, at least one other $\alpha$-olefin to yield said polyethylene, wherein said polymerisation is carried out in at least three steps.

11. A process as claimed in claim 10, comprising the sequential steps (a)-(c):

(a) polymerising ethylene in a first reactor to produce a lower molecular weight ethylene homopolymer;
(b) polymerising ethylene and an $\alpha$-olefin comonomer in a second reactor to produce a first higher molecular weight ethylene copolymer; and
(c) polymerising ethylene and an $\alpha$-olefin comonomer in a third reactor to produce a second higher molecular weight ethylene copolymer; or
(a) polymerising ethylene in a first reactor to produce a lower molecular weight ethylene homopolymer;
(b) polymerising ethylene and an $\alpha$-olefin comonomer in a second reactor to produce a second higher molecular weight ethylene copolymer; and
(c) polymerising ethylene and an $\alpha$-olefin comonomer in a third reactor to produce a first higher molecular weight ethylene copolymer.

12. A composition comprising a polyethylene as claimed in any one of claims 1-9.

13. A composition as claimed in claim 12 having:

- a FNCT time to failure of greater than 20 hours as measured according to ISO16770 with 8.5MPa load at a temperature of 80°C
- a Charpy impact of greater than 12 kJ/m$^2$ as measured according to ISO179-1/1eA on compression moulded specimens at +23°C; and/or
- a Shore hardness of at least 50 as measured according to a digital shoremeter.

14. An article comprising a polyethylene as claimed in any one of claims 1-9 or a composition as claimed in claim 12 or claim 13.

15. An article as claimed in claim 14 which is a pipe.

16. A process for the preparation of an article as claimed in claim 14 or 15, comprising moulding a polyethylene as claimed in any one of claims 1-9 or a composition as claimed in claim 12 or claim 13.

17. Use of a polyethylene as claimed in any one of claims 1-9 or a composition as claimed in claim 12 or claim 13 in the manufacture of a pipe.

**Patentansprüche**

1. Polyethylen, das eine multimodale Molekulargewichtsverteilung aufweist, umfassend:

(i) 20-70% Gew.-% eines niedermolekularen Ethylenhomopolymers;
(ii) 20-70% Gew.-% eines ersten höhermolekularen Ethylencopolymers; und
(iii) 0,5-9,5 Gew.-% eines zweiten höhermolekularen Ethylencopolymers,

wobei das zweite höhermolekulare Ethylencopolymer ein höheres gewichtsdurchschnittliches Molekulargewicht aufweist als das erste höhermolekulare Ethylencopolymer.

2. Polyethylen nach Anspruch 1, wobei das zweite höhermolekulare Copolymer in einer Menge von 1,5 - 6 Gew.-% vorliegt.

3. Polyethylen nach Anspruch 1 oder Anspruch 2, wobei das zweite höhermolekulare Ethylencopolymer einen höheren gewichtsprozentualen Comonomergehalt als das erste höhermolekulare Comonomer aufweist.

4. Polyethylen nach einem der vorhergehenden Ansprüche, wobei das zweite höhermolekulare Ethylencopolymer einen Comonomergehalt von 1 bis 20 Gew.-% aufweist.

5. Polyethylen nach einem der vorhergehenden Ansprüche, wobei das erste höhermolekulare Ethylencopolymer einen Comonomergehalt von 0,3 bis 2,5 Gew.-% aufweist.

6. Polyethylen nach einem der vorhergehenden Ansprüche, wobei das erste höhermolekulare Ethylencopolymer und/oder das zweite höhermolekulare Ethylencopolymer ein Ethylen-1-buten-Copolymer ist/sind.

7. Polyethylen nach einem der vorhergehenden Ansprüche, wobei das zweite höhermolekulare Ethylencopolymer ein gewichtsdurchschnittliches Molekulargewicht von 200.000 bis 2.000.000 g/Mol aufweist.

8. Polyethylen nach einem der vorhergehenden Ansprüche, wobei das erste höhermolekulare Ethylencopolymer ein gewichtdurchschnittliches Molekulargewicht von 200.000 bis 700.000 g/Mol aufweist.

9. Polyethylen nach einem der vorhergehenden Ansprüche, das eine Dichte von 945 - 962 kg/m$^3$, wie durch ISO 1183:1987(E), Methode D, mit Isopropanol-Wasser als Gradientenflüssigkeit gemessen, und/oder eine MFR$_5$ von 0,15-0,6 g/10 min, wie ISO 1133 entsprechend bei einer Belastung von 5,0 kg gemessen, aufweist.

10. Verfahren zur Herstellung eines Polyethylens nach einem der Ansprüche 1 bis 9, umfassend das Polymerisieren von Ethylen und, wie erforderlich, mindestens eines anderen $\alpha$-Olefins, um das Polyethylen zu ergeben, wobei die Polymerisation in mindestens drei Schritten ausgeführt wird.

11. Verfahren nach Anspruch 10, umfassend die sequentiellen Schritte (a) - (c):

(a) Polymerisieren von Ethylen in einem ersten Reaktor, um ein niedermolekulares Ethylenhomopolymer herzustellen,
(b) Polymerisieren von Ethylen und einem $\alpha$-Olefincomonomer in einem zweiten Reaktor, um ein erstes höhermolekulares Ethylencopolymer herzustellen,
(c) Polymerisieren von Ethylen und einem $\alpha$-Olefincomonomer in einem dritten Reaktor, um ein zweites höhermolekulares Ethylencopolymer herzustellen; oder
(a) Polymerisieren von Ethylen in einem ersten Reaktor, um ein niedermolekulares Ethylenhomopolymer herzustellen,
(b) Polymerisieren von Ethylen und einem $\alpha$-Olefincomonomer in einem zweiten Reaktor, um ein zweites höhermolekulares Ethylencopolymer herzustellen; und
(c) Polymerisieren von Ethylen und einem $\alpha$-Olefincomonomer in einem dritten Reaktor, um ein erstes höhermolekulares Ethylencopolymer herzustellen.

12. Zusammensetzung umfassend ein Polyethylen nach einem der Ansprüche 1 - 9.

13. Zusammensetzung nach Anspruch 12, die Folgendes aufweist:

- eine FNCT- (Full Notch Creep Test) Zeit bis zum Versagen von mehr als 20 Stunden, wie ISO16770 entsprechend mit einer Belastung von 8,5 MPA bei einer Temperatur von 80 °C gemessen
- eine Kerbschlagbiegung nach Charpy von mehr als 12 kJ/m$^2$, wie ISO179-1/1eA entsprechend an druckgeformten Proben bei +23 °C gemessen; und//oder
- eine Shore-Härte von mindestens 50, wie einem digitalen Shore-Messgerät entsprechend gemessen.

14. Artikel umfassend ein Polyethylen nach einem der Ansprüche 1 - 9 oder Zusammensetzung nach Anspruch 12 oder Anspruch 13.

**15.** Artikel nach Anspruch 14, der eine Röhre ist.

**16.** Verfahren zur Herstellung eines Artikels nach Anspruch 14 oder 15, umfassend das Formen eines Polyethylens nach einem der Ansprüche 1 - 9 oder einer Zusammensetzung nach Anspruch 12 oder Anspruch 13.

**17.** Verwendung eines Polyethylens nach einem der Ansprüche 1 - 9, oder einer Zusammensetzung nach Anspruch 12 oder Anspruch 13 bei der Herstellung eines Rohrs.

**Revendications**

**1.** Polyéthylène ayant une distribution multimodale de poids moléculaires, comprenant:

(i) de 20 à 70 % en pds d'un homopolymère d'éthylène de poids moléculaire inférieur;
(ii) de 20 à 70 % en pds d'un premier copolymère d'éthylène de poids moléculaire supérieur; et
(iii) de 0,5 à 9,5 % en pds d'un second copolymère d'éthylène de poids moléculaire supérieur,

dans lequel ledit second copolymère d'éthylène de poids moléculaire supérieur présente un poids moléculaire moyen en poids supérieur à celui dudit premier copolymère d'éthylène de poids moléculaire supérieur.

**2.** Polyéthylène tel que revendiqué selon la revendication 1, dans lequel ledit second copolymère de poids moléculaire supérieur est présent en une quantité de 1,5 à 6 % en pds.

**3.** Polyéthylène tel que revendiqué selon la revendication 1 ou la revendication 2, dans lequel ledit second copolymère d'éthylène de poids moléculaire supérieur présente une teneur en % en pds supérieure en comonomère par rapport audit premier copolymère de poids moléculaire supérieur.

**4.** Polyéthylène tel que revendiqué selon l'une quelconque des revendications précédentes, dans lequel ledit second copolymère d'éthylène de poids moléculaire supérieur présente une teneur en comonomère de 1 à 20 % en pds.

**5.** Polyéthylène tel que revendiqué selon l'une quelconque des revendications précédentes, dans lequel ledit premier copolymère d'éthylène de poids moléculaire supérieur présente une teneur en comonomère de 0,3 à 2,5 % en pds.

**6.** Polyéthylène tel que revendiqué selon l'une quelconque des revendications précédentes, dans lequel ledit premier copolymère d'éthylène de poids moléculaire supérieur et/ou ledit second copolymère d'éthylène de poids moléculaire supérieur est un copolymère d'éthylène 1-butène.

**7.** Polyéthylène tel que revendiqué selon l'une quelconque des revendications précédentes, dans lequel ledit second copolymère d'éthylène de poids moléculaire supérieur présente un poids moléculaire moyen en poids de 200 000 à 2 000 000 g/mol.

**8.** Polyéthylène tel que revendiqué selon l'une quelconque des revendications précédentes, dans lequel ledit premier copolymère d'éthylène de poids moléculaire supérieur présente un poids moléculaire moyen en poids de 200 000 à 700 000 g/mol.

**9.** Polyéthylène tel que revendiqué selon l'une quelconque des revendications précédentes, ayant une densité de 945 à 962 kg/m$^3$ telle que mesurée selon la norme ISO 1183:1987 (E), procédé D, avec de l'isopropanol-eau comme liquide en gradient et/ou un MFR$_5$ de 0,15 à 0,6 g/10 min tel que mesuré selon la norme ISO 1133 sous une charge de 5,0 kg.

**10.** Procédé de préparation d'un polyéthylène tel que revendiqué selon l'une quelconque des revendications 1 à 9 comprenant la polymérisation d'éthylène et, tel que requis, au moins une autre α-oléfine pour produire ledit polyéthylène, dans lequel ladite polymérisation est conduite en au moins trois étapes.

**11.** Procédé tel que revendiqué selon la revendication 10, comprenant les étapes séquentielles (a) à (c):

(a) polymérisation d'éthylène dans un premier réacteur pour produire un homopolymère d'éthylène de poids moléculaire inférieur;

(b) polymérisation d'éthylène et d'un comonomère d'α-oléfine dans un second réacteur pour produire un premier copolymère d'éthylène de poids moléculaire supérieur; et

(c) polymérisation d'éthylène et d'un comonomère d'α-oléfine dans un troisième réacteur pour produire un second copolymère d'éthylène de poids moléculaire supérieur; ou

(a) polymérisation d'éthylène dans un premier réacteur pour produire un homopolymère d'éthylène de poids moléculaire inférieur;

(b) polymérisation d'éthylène et d'un comonomère d'α-oléfine dans un second réacteur pour produire un second copolymère d'éthylène de poids moléculaire supérieur; et

(c) polymérisation d'éthylène et d'un comonomère d'α-oléfine dans un troisième réacteur pour produire un premier copolymère d'éthylène de poids moléculaire supérieur.

12. Composition comprenant un polyéthylène tel que revendiqué selon l'une quelconque des revendications 1 à 9.

13. Composition telle que revendiquée selon la revendication 12 ayant:

- une durée de fonctionnement avant défaillance conformément au FNCT supérieure à 20 heures telle que mesurée selon la norme ISO16770 sous une charge de 8,5 MPa à une température de 80°C
- une valeur à l'essai de résilience de Charpy supérieure à 12 kJ/m$^2$ telle que mesurée selon la norme ISO179-1/1eA sur des échantillons moulés par compression à +23°C; et/ou
- une dureté Shore d'au moins 50 telle que mesurée selon un shoremètre numérique.

14. Article comprenant un polyéthylène tel que revendiqué selon l'une quelconque des revendications 1 à 9 ou composition telle que revendiquée selon la revendication 12 ou la revendication 13.

15. Article tel que revendiqué selon la revendication 14 qui est une canalisation.

16. Procédé de préparation d'un article tel que revendiqué selon la revendication 14 ou 15, comprenant le moulage d'un polyéthylène tel que revendiqué selon l'une quelconque des revendications 1 à 9 ou d'une composition telle que revendiquée selon la revendication 12 ou la revendication 13.

17. Utilisation d'un polyéthylène tel que revendiqué selon l'une quelconque des revendications 1 à 9 ou d'une composition telle que revendiquée selon la revendication 12 ou la revendication 13 dans la fabrication d'une canalisation.

Figure 1

Figure 2

Figure 3

Figure 4

Figure 5

**Abrasion versus fraction HMW2**

Figure 6

**Shore hardness versus fraction HMW2**

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090105422 A
- US 6713561 B
- US 7829646 B
- WO 2004058878 A
- WO 2006045550 A
- EP 1041113 A
- US 6828267 B
- US 4081674 A
- US 4792588 A
- WO 9802246 A
- EP 520732 A

- US 7312283 B
- US 5880241 A
- EP 279863 A
- WO 9323439 A
- EP 793678 A
- WO 9600245 A
- WO 9729134 A
- WO 9109882 A
- WO 9731038 A
- EP 810344 A
- EP 792297 A

### Non-patent literature cited in the description

- **G.J.P. BRITOVSEK et al.** The Search for New-Generation Olefin Polymerization Catalysts: Life beyond Metallocenes. *Angew. Chemie Int. Ed.,* 1999, vol. 38, 428

- **H. MAKIO et al.** FI Catalysts: A New Family of High Performance Catalysts for Olefin Polymerization. *Advanced Synthesis and Catalysis,* 2002, vol. 344, 477